(19) Europäisches Patentamt / European Patent Office / Office européen des brevets

(11) **EP 3 521 350 B1**

(12) **EUROPEAN PATENT SPECIFICATION**

(45) Date of publication and mention of the grant of the patent:
**30.10.2024 Bulletin 2024/44**

(21) Application number: **17856327.6**

(22) Date of filing: **28.09.2017**

(51) International Patent Classification (IPC):
**C08J 5/18** (2006.01)   **C08F 265/06** (2006.01)
**C08F 285/00** (2006.01)   **C08F 220/14** (2006.01)
**C08F 2/22** (2006.01)   **C08L 51/00** (2006.01)
**B32B 27/30** (2006.01)   **B32B 27/08** (2006.01)
**B32B 27/18** (2006.01)   **B32B 27/20** (2006.01)
**B32B 27/22** (2006.01)   **B32B 27/36** (2006.01)

(52) Cooperative Patent Classification (CPC):
(C-Sets available)
**B32B 27/22; B32B 27/08; B32B 27/18;
B32B 27/20; B32B 27/302; B32B 27/304;
B32B 27/306; B32B 27/308; B32B 27/365;
C08F 2/22; C08F 265/06; C08F 285/00; C08J 5/18;
C08L 51/003;** B32B 2250/02;          (Cont.)

(86) International application number:
**PCT/JP2017/035197**

(87) International publication number:
**WO 2018/062378 (05.04.2018 Gazette 2018/14)**

(54) **ACRYLIC RESIN FILM AND PRODUCTION METHOD THEREFOR**

ACRYLHARZFILM UND HERSTELLUNGSVERFAHREN DAFÜR

FILM DE RÉSINE ACRYLIQUE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2016 JP 2016191769
07.04.2017 JP 2017076664**

(43) Date of publication of application:
**07.08.2019 Bulletin 2019/32**

(73) Proprietor: **Kuraray Co., Ltd.
Okayama 710-0801 (JP)**

(72) Inventors:
• **NIIMURA, Takuro**
  **Tainai-shi**
  **Niigata 959-2691 (JP)**
• **YAMASHITA, Taketomo**
  **Tainai-shi**
  **Niigata 959-2691 (JP)**
• **NAKAHARA, Atsuhiro**
  **Tainai-shi**
  **Niigata 959-2691 (JP)**
• **FUJII, Nariaki**
  **Tainai-shi**
  **Niigata 959-2691 (JP)**
• **MATSUI, Tomoyuki**
  **Tainai-shi**
  **Niigata 959-2691 (JP)**

(74) Representative: **Müller-Boré & Partner
Patentanwälte PartG mbB
Friedenheimer Brücke 21
80639 München (DE)**

(56) References cited:
EP-A1- 0 210 450      JP-A- 2001 064 469
JP-A- 2005 163 003    JP-A- 2009 073 984
JP-A- H1 171 437      JP-A- S57 140 161
US-A- 4 452 941       US-A- 4 508 875

EP 3 521 350 B1

(52) Cooperative Patent Classification (CPC): (Cont.)
B32B 2250/24; B32B 2307/412; B32B 2307/70;
B32B 2307/732; B32B 2307/736; B32B 2307/738;
C08F 220/14; C08J 2351/00; C08J 2433/12

C-Sets
**C08F 265/06, C08F 220/14, C08F 220/1804,
C08F 220/40;
C08F 285/00, C08F 220/14, C08F 220/1804;
C08L 51/003, C08K 5/005, C08L 33/12;
C08L 51/003, C08K 5/3475, C08L 33/12**

**Description**

The present invention relates to a resin film and a production method thereof. Specifically, the present invention relates to a resin film being excellent in transparency, hot water (80°C) whitening resistance, boiling water (100°C) whitening resistance, stress whitening resistance, film formability and thermal shrinkage resistance, and a production method thereof.

An acrylic resin film is excellent in transparency, designability, weather resistance and so on. The film is known as a film material used for an outermost surface layer on a wall material (for example, see Patent Document 1 and so on). The wall material used for garages, bath rooms, toilets, lavatories and so on is frequently in contact with hot water. Incidentally, the acrylic resin film may be whitened when directly coming into contact with hot water (about 80°C).

In order to improve the hot water whitening resistance, Patent Document 2 discloses an acrylic resin film composed of an acrylic resin material that rubber particles are dispersed in a methacrylic resin, wherein the film has a content of a water-soluble substance of 200 ppm or less, a haze value after dipping for 1 hour in a hot water of 80°C of 5% or less, and a thickness of 50 $\mu$m or more and 600 $\mu$m or less.

Patent Document 3 discloses an acrylic resin film formed of an acrylic resin composition and the film having not more than 30 micro-voids per 400 $\mu$m$^2$, wherein the micro-voids have a major diameter of less than 500 nm.

On the other hand, Patent Document 4 discloses a film composed of a methacrylic resin composition comprising 100 parts by mass in total of 60 to 98% by mass of a methacrylic resin (A) and 40 to 2% by mass of multilayer structure polymer particles (B) and 0.1 to 5 parts by mass of silicone fine particles (C), for improving impact resistance, lubricity and delustering property.

Patent Document 5 discloses, for improving adhesiveness with metal, a (meth)acrylic resin film containing acrylic rubber particles (A) having an acid value of 0.2 mmol/g or more, wherein an acid value throughout a resin constituting the film of 0.15 mmol/g or more and 1.5 mmol/g or less.

Patent Document 6 discloses a multi-layer structure polymer composition having the layers (A), (B) and (C) as fundamental structural unit. The layer (A) is an innermost layer polymer (A) comprises 50-100 parts by weight of an alkyl acrylate (A1), and 0-50 parts by weight of an alkyl methacrylate (A2). Patent Document 6 only discloses multilayer structure polymers [I] comprising each of the innermost layer polymers (A) consisting of MMA/BuA/BD/AMA (1.6/8/0.4/0.1), MMA/BuA/BD/AMA (4/5.6/0.4/0.1), MMA/BuA/BD/AMA (0.6/9/0.4/0.1), MMA/BuA/BD/AMA (0.9/8.5/0.6/0.1), MMA/2EHA/BD/AMA (1.6/8/0.4/0.1), MMA/St/BuA/BD/AMA (1.28/0.32/8/0.4/0.1) and MMA/BuA/BD/AMA (1.6/8/0.4/0.1) in Examples thereof. All of these innermost layer polymers (A) are composed of less than 40% by mass of a structural unit derived from methyl methacrylate, and more than 60% by mass of a structural unit derived from an alkyl acrylate having a 1 to 8 carbon alkyl group.

Patent Document D7 discloses an acrylic multilayer structure granular composite body and a film made of the acrylic multilayer structure granular composite body.

Patent Document 8 discloses a film composed of an acrylic resin composition. The composition comprises an acrylic multilayer polymer particle (A) and a polymer processing agent (B). The acrylic multilayer polymer particle (A) comprises an inner layer and an outermost layer.

Patent Document D8 discloses a film composed of an acrylic resin composition. The composition comprises an acrylic multilayer polymer particle (A) and a polymer processing agent (B). The acrylic multilayer polymer particle (A) comprises an inner layer and an outermost layer.

Patent Document D9 discloses a thermoplastic acrylic resin composition consisting of at least one multilayer structure polymer [I] and at least one multilayer structure polymer [II]. The multilayer structure polymer [I] and [II] comprise an inner layer polymer (A) and (A') constituted of 60 to 100 parts by weight of an alkyl acrylate. These inner layer polymers [I] and [II] are composed of less than 40% by mass of a structural unit derived from methyl methacrylate, and more than 60% by mass of a structural unit derived from an alkyl acrylate having a 1 to 8 carbon alkyl group.

Patent Document D10 discloses an acrylic resin film made of an acrylic resin composition comprising a rubber elastic particle. The rubber elastic particle obtained by emulsion polymerization of a mixture (b) and then emulsion polymerization of a mixture (a). Patent Document 10 teaches that the mixture (b) contains not less than 50 % by weight of an alkyl acrylate.

Patent Document D11 discloses a coating film for a high luminance reflector consisting essentially of [I] from 20 to 80 parts by weight of a thermoplastic polymer and [II] from 20 to 80 parts by weight of at least one rubber-containing multi-layer structure polymer, and having a gel content of from 10 to 50% by weight.

Patent Document 1: JP 2000-191804 A

Patent Document 2: JP 2003-277528 A

Patent Document 3: JP 2009-73984 A

Patent Document 4: JP 2004-263034 A

Patent Document 5: WO2012/053190A1

Patent Document 6: US 4508875 A

Patent Document 7: JP H11-71437 A

Patent Document 8: JP 2001-064469 A

Patent Document 9: US 4452941 A

Patent Document 10: JP 2009-073984 A

Patent Document 11: EP 0210450 A1

An object of the present invention is to provide a resin film being excellent in transparency, weather resistance, hot water (80°C) whitening resistance, boiling water (100°C) whitening resistance, stress whitening resistance, film formability and thermal shrinkage resistance, and a production method thereof.

Studies in order to achieve the above object have resulted in completion of the present invention. The present invention is defined in the appended claims.

A resin film of the present invention is excellent in transparency, hot water (80°C) whitening resistance, boiling water (100°C) whitening resistance, stress whitening resistance, film formability and thermal shrinkage resistance.

The method of the present invention can produce a resin film excellent in transparency, hot water (80°C) whitening resistance, boiling water (100°C) whitening resistance, stress whitening resistance, film formability and thermal shrinkage resistance.

Furthermore, the resin film of the present invention has a small residual amount of a water-soluble matter such as an emulsifying agent or a polymerization initiator used during polymerization. Since the method of the present invention sets a process undergoing a state likely to be a relatively high heat such as drying and extrusion molding to a short time and a low temperature, a received heat amount may be suppressed low.

The resin film of the present invention has an acid value in an acetone-insoluble matter of not more than 0.018 mmol/g, preferably not more than 0.015 mmol/g, and more preferably not more than 0.012 mmol/g. The lower limit of the acid value in the acetone insoluble matter of the film of the present invention is preferably 0.001 mmol/g. As the acid value in the acetone insoluble matter of the film becomes lower, the hot water whitening resistance or boiling water whitening resistance of the film tends to be improved.

The resin film of the present invention has an acid value in an acetone soluble matter of not more than 0.012 mmol/g, preferably not more than 0.009 mmol/g, and more preferably not more than 0.007 mmol/g. The lower limit of the acid value in the acetone soluble matter of the film of the present invention is preferably 0.001 mmol/g. As the acid value of the acetone soluble matter of the film becomes lower, the hot water whitening resistance or boiling water whitening resistance of the film tends to be improved.

The resin film of the present invention has a glass transition temperature of not less than 80°C, preferably not less than 90°C, and further preferably not less than 100°C. As the glass transition temperature of the film becomes higher, the hot water whitening resistance or boiling water whitening resistance of the film tends to be improved.

The resin film of the present invention has a thickness of 5 to 300 um, preferably 10 to 200 $\mu$m, and further more preferably 15 to 100 $\mu$m.

The resin film of a preferable aspect of the present invention has a haze ($H_0$) of preferably not more than 1.5%, more preferably not more than 1%, and still more preferably not more than 0.5% at an ambient temperature. Incidentally, the haze is measured with a test piece having an optical path length of 50 um in accordance with JIS K 7136.

The resin film of the present invention has a haze variation width ($\Delta H^{80}$) before and after a hot water whitening resistance test with water of 80°C of 5% or less. The resin film of the present invention has a haze variation width ($\Delta H^{100}$) before and after a boiling water whitening resistance test with water of 100°C (boiling water) of 5% or less.

The resin film of the present invention comprises a multilayer structure acrylic polymer.

As a layer structure of the multilayer structure acrylic polymer, for example, a core-shell multilayer structure, a sea-island multilayer structure, a mosaic multilayer structure or the like may be mentioned. Among these, a core-shell multilayer structure is preferred.

A core-shell multilayer structure acrylic polymer is obtained by, for example, melting and kneading a three-layer granule composed of a core, an inner shell and an outer shell. The core and the inner shell, and the inner shell and the outer shell differ from each other in polymer constitutions. Between the core and inner shell, and between the inner shell and outer shell, these are preferable to be in contact with each other without space therebetween. A polymer constituting the inner shell is preferably softer than a polymer constituting the core and a polymer constituting the outer shell. The polymer constituting the inner shell and the polymer constituting the core are preferably insoluble in acetone. The polymer constituting the outer shell is preferably soluble in acetone. The polymer constituting the outer shell may be a matrix for a two-layer granule composed of the core and inner shell due to fusion of all or part of the outer shells by melting and kneading the three-layer granules.

The three-layer granules contained in the core-shell multilayer structure acrylic polymer have a lower limit of an average particle size of preferably 0.01 um, more preferably 0.04 um, further more preferably 0.05 um, still more preferably 0.1 $\mu$m, and an upper limit of the average particle size of preferably 0.35 $\mu$m, more preferably 0.3 $\mu$m, further more preferably 0.2 $\mu$m, and still more preferably 0.15 $\mu$m. As the average particle size of the granules becomes larger, the stress whitening resistance of the film tends to decrease. Incidentally, an average particle size of the three-layer granules is a value determined by a light scattering method.

The multilayer structure acrylic polymer according to the present invention comprises a polymer (a), a polymer (b) and a polymer (c) and forms a layer structure therewith. In the core-shell multilayer structure acrylic polymer, it is preferable that the polymer (a) constitutes the core, the polymer (b) constitutes the inner shell, and the polymer (c) constitutes the outer shell.

An amount of the polymer (a) contained in the multilayer structure acrylic polymer is preferably 5 to 30% by mass, and more preferably 10 to 20% by mass relative to a mass of the multilayer structure acrylic polymer. As the amount of the polymer (a) becomes lower, the thermal stability and productivity of the multilayer structure acrylic polymer tend to decrease. As the amount of the polymer (a) becomes larger, the impact resistance and flexibility of the film tend to decrease.

An amount of the polymer (b) contained in the multilayer structure acrylic polymer is preferably 20 to 45% by mass, and more preferably 30 to 40% by mass relative to the mass of the multilayer structure acrylic polymer. As the amount of the polymer (b) becomes smaller, the thermal stability and productivity of the multilayer structure acrylic polymer tend to decrease. As the amount of the polymer (b) becomes larger, the impact resistance and flexibility of the film tend to be improved.

An amount of the polymer (c) contained in the multilayer structure acrylic polymer is preferably 50 to 75% by mass, and more preferably 50 to 60% by mass relative to the mass of the multilayer structure acrylic polymer. As the amount of the polymer (c) becomes smaller, the fluidity of the multilayer structure acrylic polymer and the formability of the film tend to decrease. As the amount of the polymer (c) becomes larger, the impact resistance and stress whitening resistance of the film tend to decrease.

The polymer (a) is a polymer composed of a structural unit derived from methyl methacrylate, a structural unit derived from an alkyl acrylate, and a structural unit derived from a grafting agent, and, as needed, a structural unit derived from a crosslinking agent.

An amount of the structural units derived from methyl methacrylate in the polymer (a) is 40 to 98.99% by mass, preferably 90 to 96 . 9°s by mass, and further more preferably 90 to 96.5% by mass relative to a total of the structural units of the polymer (a) . As the amount of the structural unit derived from methyl methacrylate becomes smaller, the weather resistance of the film tends to decrease, and as the amount of the structural unit derived from methyl methacrylate increases, the impact resistance of the film tends to decrease.

An amount of the structural unit derived from alkyl acrylate in the polymer (a) is preferably 1 to 59.99% by mass, more preferably 2.6 to 9.99% by mass, and further more preferably 3 to 9.9% by mass relative to the total of the structural units of the polymer (a). The alkyl group in the alkyl acrylate has preferably 1 to 8 carbon atoms. As the amount of the structural units derived from alkyl acrylate becomes smaller, the thermal decomposition resistance of the multilayer structure acrylic polymer tends to decrease, and as the amount of the structural units derived from alkyl acrylate increases, the hot water whitening resistance or the boiling water whitening resistance of the film tends to decrease.

An amount of the structural units derived from grafting agent in the polymer (a) is 0.01 to 1% by mass, and preferably 0.1 to 0.5% by mass relative to the total of the structural units of the polymer (a). As the amount of the structural units derived from grafting agent becomes smaller, cohesive strength between the polymer (a) and the polymer (b) tends to decrease, and as the amount of the structural units derived from grafting agent increases, the impact resistance of the film tends to decrease.

An amount of structural units derived from crosslinking agent in the polymer (a) is 0 to 0.5% by mass, and preferably 0 to 0.2% by mass relative to the total of the structural units of the polymer (a). As the amount of the structural units derived from crosslinking agent increases, the impact resistance of the film tends to decrease.

The polymer (b) is a polymer composed of a structural unit derived from an alkyl acrylate, a structural unit derived from a grafting agent, and, as needed, a structural unit derived from methyl methacrylate, and a structural unit derived from a crosslinking agent.

An amount of the structural units derived from alkyl acrylate in the polymer (b) is 70 to 99.5% by mass, and preferably 80 to 99% by mass relative to a total of the structural units of the polymer (b). The alkyl group in the alkyl acrylate has 1 to 8 carbon atoms. As the amount of the structural units derived from alkyl acrylate becomes smaller, the impact resistance of the film tends to become lower, and as the amount of the structural units derived from alkyl acrylate increases, the stress whitening resistance and transparency of the film tend to decrease.

An amount of the structural units derived from grafting agent in the polymer (b) is 0.5 to 5% by mass, and preferably 1 to 3% by mass relative to the total of the structural units of the polymer (b). As the amount of the structural units derived from grafting agent becomes smaller, the stress whitening resistance of the film tends to decrease, and as the amount of the structural units derived from grafting agent increases, the impact resistance of the film tends to decrease.

An amount of the structural units derived from methyl methacrylate in the polymer (b) is 0 to 29.5% by mass, and preferably 0 to 19% by mass relative to the total of the structural units of the polymer (b). As the amount of the structural units derived from methyl methacrylate becomes larger, the impact resistance of the film tends to decrease.

An amount of the structural units derived from crosslinking agent in the polymer (b) is 0 to 5% by mass, and preferably 0 to 2% by mass relative to the total of the structural units of the polymer (b). As the amount of the structural units derived from crosslinking agent becomes larger, the impact resistance of the film tends to decrease.

The polymer (c) is a polymer composed of a structural unit derived from methyl methacrylate, and a structural unit derived from an alkyl acrylate.

An amount of the structural units derived from methyl methacrylate in the polymer (c) is 80 to 99% by mass, and preferably 95 to 98% by mass relative to a total of the structural units of the polymer (c). As the amount of the structural units derived from methyl methacrylate becomes smaller, the stress whitening resistance of the film tends to become lower, and as the amount of the structural units derived from methyl methacrylate increases, the thermal decomposition resistance of the multilayer structure acrylic polymer tends to become lower.

An amount of the structural units derived from alkyl acrylate in the polymer (c) is 1 to 20% by mass, and preferably 2 to 5% by mass relative to the total of the structural units, of the polymer (c). The alkyl group in the alkyl acrylate has 1 to 8 carbon atoms. As the amount of the structural units derived from alkyl acrylate becomes smaller, the thermal decomposition resistance of the multilayer structure acrylic polymer tends to decrease, and as the amount of the structural units derived from alkyl acrylate increases, the stress whitening resistance of the film tends to decrease.

The polymer (c) has a glass transition temperature of 80°C or more, preferably 90°C or more, and further more preferably 100°C or more. As the glass transition temperature of the polymer (c) becomes higher, the hot water whitening resistance or the boiling water whitening resistance tend to be improved.

Examples of the alkyl acrylate to be used in the polymer (a), the polymer (b) and the polymer (c) can include methyl acrylate, ethyl acrylate, n-propyl acrylate, n-butyl acrylate, s-butyl acrylate, t-butyl acrylate, n-butyl methyl acrylate, n-heptyl acrylate, 2-ethylhexyl acrylate, and n-octyl acrylate. These alkyl acrylates may be used alone or in a combination of two or more. Among these, methyl acrylate and/or n-butyl acrylate are preferable.

The grafting agent to be used in the polymer (a) and the polymer (b) is a monomer considered to have a main role of chemically bonding between the polymer (a) and the polymer (b) and between the polymer (b) and the polymer (c) and furthermore to have an auxiliary role of forming a crosslinked structure in the polymer (a) or the polymer (b).

The grafting agent in the present invention is a monomer having two or more different kinds of polymerizable groups. Examples of the grafting agent in the present invention can include allyl methacrylate, ally acrylate, mono- or di-allyl maleate, mono- or di-allyl fumarate, crotyl acrylate, and crotyl methacrylate. These grafting agents may be used alone or in a combination of two or more. Among these, ally methacrylate is preferably used because ally methacrylate is excellent in an action of improving the bonding potential between the polymer (a) and the polymer (b) or between the polymer (b) and the polymer (c), and improving stress whitening resistance and transparency of the film.

The crosslinking agent to be used in the polymer (a) and the polymer (b) is a monomer considered to have a main role of forming a crosslinked structure in the polymer (a) or the polymer (b).

The crosslinking agent in the present invention is a monomer having two or more of the same polymerizable groups, and examples thereof can be a diacryl compound, a dimethacryl compound, a diallyl compound, a divinyl compound, a diene compound and a trivinyl compound. Examples of the crosslinking agent in the present invention can include ethylene glycol di (meth) acrylate, butylene glycol di(meth)acrylate, propylene glycol di(meth)acrylate, polyethylene glycol di(meth)acrylate, divinyl benzene, trivinyl benzene, ethylene glycol diallyl ether, propylene glycol diallyl ether, and butadiene. These crosslinking agents may be used alone or in a combination of two or more.

Furthermore, the multilayer structure acrylic polymer to be used in the present invention has a melt flow rate under 230°C and 3.8 kg load of preferably 0.5 to 20 g/10min., and more preferably 0.8 to 10 g/10min. As the melt flow rate of the multilayer structure acrylic polymer becomes lower, the fluidity of the multilayer structure acrylic polymer and the formability of the film tend to decrease. As the melt flow rate of the multilayer structure acrylic polymer becomes higher, the mechanical characteristics of the film tends to decrease.

The multilayer structure acrylic polymer to be used in the present invention has an acid value in an acetone insoluble matter of not larger than 0.008 mmol/g, preferably not larger than 0.006 mmol/g, and further more preferably not larger than 0.004 mmol/g. The lower limit of the acid value of acetone insoluble matter of the multilayer structure acrylic polymer is preferably 0.001 mmol/g. As the acid value of acetone insoluble matter of the multilayer structure acrylic polymer becomes lower, the hot water whitening resistance or the boiling water whitening resistance of the film tends to be improved.

The multilayer structure acrylic polymer to be used in the present invention has an acid value in an acetone soluble matter of 0.012 mmol/g or less, preferably 0.009 mmol/g or less, and further more preferably 0.007 mmol/g or less. The lower limit of the acid value of acetone soluble matter of the multilayer structure acrylic polymer is preferably 0.001 mmol/g. As the acid value of acetone soluble matter of the multilayer structure acrylic polymer becomes lower, the hot water whitening resistance or the boiling water whitening resistance of the film tends to be improved.

Incidentally, polymer chains of the polymer (a), polymer chains of the polymer (b), and polymer chains of the polymer (c) graft-bonded to the polymer chain of the polymer (b) are detected as the acetone insoluble matter. Polymer chains of the polymer (c) not graft-bonded to the polymer chain of the polymer (b) are detected as the acetone soluble matter.

The multilayer structure acrylic polymer is not particularly restricted by its production method. For example, a core-shell multilayer structure acrylic polymer can be obtained by sequentially forming the polymer (a), the polymer (b) and the polymer (c) according to a seed emulsion polymerization.

The resin film of the present invention may contain another thermoplastic resin in addition to the multilayer structure acrylic polymer. Examples of the other thermoplastic resin can include polycarbonate polymers, vinyl chloride polymers, vinylidene fluoride polymers, vinyl acetate polymers, maleic acid copolymers, acrylic resins, ABS resins, AES resins, and AS resins. A mass ratio of the other thermoplastic resin to the multilayer structure acrylic polymer is preferably 0/100 to 35/65, and more preferably 0/100 to 20/80.

A production method of the resin film of the present invention comprises performing an emulsion polymerization of acrylic monomers to obtain a latex containing the multilayer structure acrylic polymer; coagulating the latex containing the multilayer structure acrylic polymer to obtain a slurry; washing and dewatering the slurry; drying the dewatered slurry to remove the multilayer structure acrylic polymer; and melting and extrusion molding a mixture of 0 to 35% by mass of an acrylic resin and 65 to 100% by mass of the removed multilayer structure acrylic polymer.

The production method of the resin film of the present invention comprises polymerizing (1st polymerization) 40 to 98.99% by mass and preferably 90 to 96.9% by mass of methyl methacrylate, 1 to 60% by mass and preferably 3 to 10% by mass of an alkyl acrylate having a 1 to 8 carbon alkyl group, 0.01 to 1% by mass and preferably 0.1 to 0.5 % by mass of a grafting agent and 0 to 0.5% by mass and preferably 0 to 0.2% by mass of a crosslinking agent in the presence of an emulsifying agent to obtain a latex (I) containing the polymer (a); polymerizing (2nd polymerization) 70 to 99.5% by mass and preferably 80 to 99% by mass of an alkyl acrylate having a 1 to 8 carbon alkyl group, 0 to 30% by mass and preferably 0 to 20% by mass of methyl methacrylate, 0.5 to 5% by mass and preferably 1 to 3% by mass of a grafting agent, and 0 to 5% by mass and preferably 0 to 2% by mass of a crosslinking agent in the presence of the latex (I) to obtain a latex (II) containing the polymer (a) and the polymer (b); polymerizing (3rd polymerization) 80 to 99% by mass and preferably 95 to 98% by mass of methyl methacrylate and 1 to 20% by mass and preferably 2 to 5% by mass of an alkyl acrylate having a 1 to 8 carbon alkyl group in the presence of the latex (II) to obtain a latex (III) containing the polymer (a), the polymer (b) and the polymer (c); coagulating the latex (III) to obtain a slurry; washing and dewatering the slurry; drying the dewatered slurry to remove a multilayer structure acrylic polymer comprising the polymer (a), the polymer (b) and the polymer (c); and melting and extrusion molding a mixture of 0 to 35% by mass of an acrylic resin and 65 to 100% by mass of the removed multilayer structure acrylic polymer.

The polymerization may be performed according to a well-known method. Among the polymerization performed in the presence of a latex, a seed emulsion polymerization is preferably employed to obtain a core-shell multilayer structure acrylic polymer. Since an emulsion polymerization or a seed polymerization is a method well-known in the art, the detail of the polymerization technique is passed on to references regarding the polymerization technology.

The feed rate of a mixture of the monomers to be used in each of the polymerizations, specifically, methyl methacrylate, an alkyl acrylate, a grafting agent and a crosslinking agent at the above proportion to a reaction system is preferably 0.05 to 3% by mass a minute, more preferably 0.1 to 1% by mass a minute, and still more preferably 0.2 to 0.8% by mass a minute relative to 100% by mass of the monomers to be used in each of the polymerizations. The feed rate within the above range can suppress generation of an undesirable polymer aggregates or polymer scale deposition to a reactor to prevent a resin film from having poor appearance such as fish eyes that may be generated due to contamination of the polymer aggregates or polymer scales.

Polymerization initiator to be used in each of the polymerizations is not particularly restricted. Examples of the polymerization initiator can include water soluble inorganic initiators such as potassium persulfate, ammonium persulfate and the like; redox initiators composed of a combination of a sulfite or a thiosulfate and an inorganic initiator; and redox initiators composed of a combination of a ferrous salt or sodium sulfoxylate and an organic peroxide. The polymerization initiators may be added collectively to a reaction system at the start of the polymerization or may be added to the reaction system in several parts at the start of the polymerization and in the middle of the polymerization while considering the reaction speed or the like. A used amount of the polymerization initiator may be appropriately set such that an average particle size of granules contained in the, for example, core-shell multilayer structure acrylic polymer can be in the above range.

The emulsifying agent to be used in each of the polymerizations is not particularly restricted. Examples of the emulsifying agents can include anionic emulsifying agents such as long-chain alkyl sulfonates, alkyl sulfosuccinates, and alkyl benzene sulfonates; nonionic emulsifying agents such as polyoxyethylene alkyl ethers and polyoxyethylene nonylphenyl ethers; nonionic anionic emulsifying agents such as polyoxyethylene nonylphenyl ether sulfates as exemplified by sodium polyoxyethylene nonylphenyl ether sulfate, polyoxyethylene alkyl ether sulfates as exemplified by sodium polyoxyethylene alkyl ether sulfate and alkyl ether carboxylates as exemplified by sodium polyoxyethylene tridecyl ether acetate. A used amount of the emulsifying agent may be appropriately set such that an average particle size of granules contained in the, for example, core-shell multilayer structure acrylic polymer is in the above range.

In the present invention, the 1st polymerization, the 2nd polymerization and the 3rd polymerization may be performed sequentially in one polymerization tank, or may be performed sequentially by changing the polymerization tank on each time of the 1st polymerization, the 2nd polymerization and the 3rd polymerization. In the present invention, the polymerizations are preferably performed sequentially in one polymerization tank. Furthermore, a temperature of the reaction system during polymerization is preferably 30 to 120°C, and more preferably 50 to 100°C.

Furthermore, in any one of the 1st polymerization, the 2nd polymerization and the 3rd polymerization, as needed, a reactive UV absorber, for example, 2-[2-hydroxy-5-(2-methacryloyloxy ethyl)phenyl]-2H-1,2,3-benzotriazole may be added. The reactive UV absorber is introduced in a molecular chain of the multilayer structure acrylic polymer to improve UV resistance of the multilayer structure acrylic polymer. An added amount of the reactive UV absorber is preferably 0.05 to 5 parts by mass relative to a total amount of 100 pats by mass of the monomers used in the polymerizations.

A chain transfer agent may be used in each polymerization to adjust a molecular weight. In the 3rd polymerization, by adding a chain transfer agent in the reaction system to adjust the molecular weight of the polymer (c), the melt flow rate of the multilayer structure acrylic polymer may be set to the above range. A chain transfer agent to be used in each of the polymerizations is not particularly restricted. Examples of the chain transfer agents can include alkyl mercaptans such as n-octyl mercaptan, n-dodecyl mercaptan, t-dodecyl mercaptan, and n-hexadecyl mercaptan; xanthogen disulfides such as dimethyl xanthogen disulfide and diethyl xanthogen disulfide; thiuram disulfides such as tetrathiuram disulfide; and halogenated hydrocarbons such as carbon tetrachloride and ethylene bromide. A used amount of the chain transfer agent may appropriately set in the range where the polymer may be set to a predetermined molecular weight in each of the polymerizations. An amount of the chain transfer agent used in the 3rd polymerization is an amount capable of making a value of the melt flow rate to the above range. An amount of the chain transfer agent used in the 3rd polymerization can varies depending on an amount of the polymerization initiator used in the 3rd polymerization but is preferably 0.05 to 2 parts by mass and more preferably 0.08 to 1 part by mass relative to a total amount of 100 parts by mass of the monomers used in the 3rd polymerization, specifically methyl methacrylate and alkyl acrylate.

The coagulation of the latex may be carried out according to a well-known method. Examples of the coagulation methods can include a freeze coagulation method, a salting-out coagulation method, and an acid precipitation coagulation method. Among these, the freeze coagulation method is preferable because there is no need of adding a coagulator that may be an impurity for the multilayer structure acrylic polymer.

Washing and dewatering of the slurry obtained by the coagulation are performed to be sufficiently performed such that the acid value of the multilayer structure acrylic polymer may be in the above range. A water soluble matters such as emulsifying agent and catalyst can be removed from the slurry by the washing and dewatering of the slurry. The washing and dewatering of the slurry may be carried out by, for example, a filter press, a belt press, a guinard centrifuge, a screw decanter centrifuge and so on. The screw decanter centrifuge is preferably used from the viewpoint of productivity and washing efficiency. The washing and dewatering of the slurry are preferably carried out at least twice. As the number of the washing and dewatering increases, the remained amount of the water soluble matters decreases. However, from the viewpoint of productivity, the number of the washing and dewatering is preferably not more than three times.

The drying of the slurry is performed such that the moisture percentage is less than 0.1% by mass. As the moisture percentage becomes higher, an ester hydrolysis tends to occur to the multilayer structure acrylic polymer during a melt extrusion molding to generate a carboxyl group in a molecular chain thereof.

The resin film of the present invention is obtained by extrusion molding the multilayer structure acrylic polymer. The multilayer structure acrylic polymer and an acrylic resin are mixed to obtain a mixture, and the mixture may be extrusion molded to obtain a resin film of the present invention. A mass ratio of the acrylic resin to the multilayer structure acrylic polymer is 0/100 to 35/65, preferably 0/100 to 30/70, and further more preferably 5/95 to 20/80. In these ranges, excellent film formability is achieved.

The acrylic resin that can be used in the extrusion molding as needed is a resin comprising a structural unit derived from methyl methacrylate and optionally a structural unit derived from an acrylic acid ester.

An amount of the structural units derived from methyl methacrylate in the acrylic resin is preferably 85 to 100% by mass, and more preferably 92 to 100% by mass relative to a total mass of structural units of the acrylic resin. An amount of the structural units derived from acrylic acid ester in the acrylic resin is preferably 0 to 15% by mass, and more preferably 0 to 8% by mass relative to the total mass of the structural units of the acrylic resin.

Examples of the acrylic acid esters in the acrylic resins can include methyl acrylate, ethyl acrylate, n-propyl acrylate, isopropyl acrylate, n-butyl acrylate, isobutyl acrylate, s-butyl acrylate, t-butyl acrylate, amyl acrylate, isoamyl acrylate, n-hexyl acrylate, 2-ethylhexyl acrylate, pentadecyl acrylate, dodecyl acrylate, cyclohexyl acrylate, norbornenyl acrylate, isobornyl acrylate, benzyl acrylate, phenoxyethyl acrylate, 2-hydroxyethyl acrylate, 2-ethoxyethyl acrylate, glycidyl acrylate, allyl acrylate, and phenyl acrylate. Among these, an alkyl acrylate having a 1 to 6 carbon alkyl group is preferable.

The acrylic resin to be used, as needed, in the extrusion molding has a glass transition temperature of preferably 95°C or more, more preferably 100°C or more, and furthermore preferably 105°C or more. The acrylic resin has a melt flow rate under 230°C and 3.8 kg load of preferably 0.5 to 20 g/10min., and more preferably 0.8 to 10 g/10min.

The acrylic resin is not particularly restricted by the production method thereof. For example, the acrylic resin can be produced by well-known polymerization method such as a radical polymerization method and an anion polymerization method. The characteristic values of the acrylic resin may be modulated by coordinating the polymerization condition, specifically, by coordinating a polymerization temperature, a polymerization time, a kind and an amount of the chain transfer agent, a kind and an amount of the polymerization initiator, and so on. This modulation of the resin characteristics by coordinating the polymerization condition is a well-known technology in one skilled in the art.

The multilayer structure acrylic polymer and the acrylic resin are pelletized to make it easy to transport, store and mold. An extruder used to pelletize the multilayer structure acrylic polymer is preferably equipped with a bent. The bent is preferably a vacuum bent or an open bent. The bent is preferably placed at least one on a downstream side than a melting start section of the resin. Incidentally, a pressure of the vacuum bent is preferably 4kPa (30 Torr) or less, more preferably 2kPa (15 Torr) or less, still more preferably 1.2kPa (9 Torr) or less, and most preferably 0.8 kPa (6 Torr) or less. When the pressure of the vacuum bent is within the above range, the devolatilization efficiency is excellent, and remaining moisture and remaining monomer may be reduced.

The extruder to be used for pelletization is preferable to be a single screw extruder. The single screw extruder can impart a small shear energy to the multilayer structure acrylic polymer and the other resulting in suppression of thermal decomposition of the polymer. A screw configuration is preferably a full flight screw.

A cylinder heating temperature of the extruder to be used for pelletization is preferably 210 to 270°C, more preferably 220 to 260°C, and further more preferably 230 to 250°C. A residence time in the extruder is preferably 7 minutes or less, more preferably 5 minutes or less, and still more preferably 3 minutes or less. As the cylinder heating temperature becomes higher or as the residence time becomes longer, the shear energy imparted to the multilayer structure acrylic polymer becomes larger, thermal decomposition of the polymer tends to progress, and the hot water whitening resistance of the film tends to decrease.

It is preferable to dry the multilayer structure acrylic polymer and the acrylic resin to reduce the moisture percentage before serving to the extrusion molding. The moisture percentage of the multilayer structure acrylic polymer and the acrylic resin just before serving to the extrusion molding is preferably less than 0.2% by mass, and more preferably less than 0.1% by mass. Higher moisture percentage is likely to incur occurrence of silver streak and deterioration of hot water whitening resistance.

The multilayer structure acrylic polymer and the acrylic resin may contain, as needed, well-known resin additives such as a UV absorber, an antioxidant, a light stabilizer, an anti-aging agent, a plasticizer, a polymer processing aid, a lubricant, a dye, and a pigment. A total content of the resin additives is preferably not more than 20% by mass relative to a total amount of 100% by mass of the multilayer structure acrylic polymer and the acrylic resin. Addition of the resin additives may be conducted, for example, on the multilayer structure acrylic polymer and the acrylic resin molten in a film forming machine, on the pelletized multilayer structure acrylic polymer or the pelletized acrylic resin by dry blending, or on the multilayer structure acrylic polymer or the acrylic resin during pelletization (master batch method).

The multilayer structure acrylic polymer and the acrylic resin preferably contain a UV absorber. Examples of the UV absorbers can include reactive UV absorbers as exemplified by 2-[2-hydroxy-5-(2-methacryloyloxyethyl)phenyl]-2H-1,2,3-benzotriazole and so on. A content of the UV absorber is preferably 0.05 to 5 parts by mass relative to a total amount of 100 parts by mass of the multilayer structure acrylic polymer and the acrylic resin.

The extruder to be used for film formation is preferably equipped with a bent. The bent is preferably a vacuum vent or an open bent. The bent is placed at least one on a downstream side than the melting start section of the resin. The pressure of the vacuum bent is preferably 4kPa (30 Torr) or less, more preferably 2kPa (15 Torr) or less, still more preferably 1.2kPa (9 Torr) or less, and most preferably 0.8kPa (6 Torr) or less. The extruder to be used for film formation is preferably a single screw extruder or a twin screw extruder rotated in the same direction.

The cylinder heating temperature of the extruder to be used for film formation is preferably 220 to 300°C, more preferably 230 to 290°C, and still more preferably 240 to 280°C. The residence time in the extruder to be used for film formation is 5 minutes or less, and preferably 3 minutes or less. As the cylinder heating temperature becomes higher or as the residence time becomes longer, the shear energy imparted to the multilayer structure acrylic polymer and the other becomes larger, thermal decomposition of the polymer tends to proceed, and the hot water whitening resistance tends to decrease. Accordingly, the extrusion molding for film formation is performed under the residence time of 5 minutes or less and the resin temperature of 280°C or less in the extruder.

A resin film of the present invention may be formed according to the production method as described above.

The resin film of the present invention is excellent in impact resistance, and is excellent in stress whitening resistance not to cause whitening even by bending, and is excellent in hot water whitening resistance and boiling water whitening resistance not to cause whitening even when exposed to hot water and boiling water. The resin film of the present invention is excellent also in adhesiveness with other polymers, particularly with a thermoplastic polymer.

A layered product of the present invention comprises at least one layer of the resin film of the present invention and at least one layer of a shaped product of another thermoplastic polymer.

The other thermoplastic polymer to be used in the layered product of the present invention is not particularly restricted. As the other thermoplastic polymers, polycarbonate polymers, vinyl chloride polymers, vinylidene fluoride polymers, vinyl acetate polymers, maleic acid copolymers, methacrylic resins, ABS resins, AES resins or AS resins are preferable, because these have excellent adhesiveness with the resin film of the present invention. The shaped product of the thermoplastic polymer may be a planar shaped product such as a film, a sheet and a plate, may be a linear shaped product such as a pipe and a bar, or may be a various shaped product as exemplified by a lens, a prism, a vessel and the like.

The layered product of the present invention is not particularly restricted by the production method thereof. The layered product of the present invention may be obtained, for example, through co-extrusion molding the above multilayer structure acrylic polymer and other thermoplastic polymer, through coating extrusion molding the multilayer structure acrylic resin on a shaped product of other thermoplastic polymer, through injecting or pouring the melted multilayer structure acrylic polymer to a desired mold inside which a shaped product of other thermoplastic polymer is placed, through injecting or pouring the melted other thermoplastic polymer to a desired mold inside which the resin film of the present invention is placed, through press molding the multilayer structure acrylic resin placed on a shaped product of other thermoplastic polymer, or through thermal fusing or adhering the resin film of the present invention on a shaped product of the other thermoplastic polymer.

Hereinafter, the present invention will be specifically described with reference to production examples, working examples and comparative examples. However, the present invention is not restricted by these. Incidentally, "parts" expresses parts by mass.

(Average particle size of latex of multilayer structure acrylic polymer)

Average particle size of a sample of a latex of the multilayer structure acrylic polymer is determined using a laser diffraction / scattering particle size distribution meter LA-910 manufactured by Horiba Ltd. according to a light scattering method.

(Melt Flow Rate)

In accordance with ASTM-D1238, melt flow rate under 230°C and 3.8 kg load (hereinafter, expressed as "MFR") was measured.

(Glass Transition Temperature)

In accordance with JIS K7121, with a differential scanning calorimeter (DSC-50, manufactured by Shimadzu Corporation), a DSC curve was measured under the condition of once increasing a temperature to 250°C, then cooling to the room temperature, then increasing at 20°C/minute from the room temperature to 230°C. A mid-point glass transition temperature obtained from this DSC curve was expressed as a glass transition temperature (hereinafter, expressed as "Tg") in the present invention.

(Moisture Percentage)

A sample is heated in a hot air dryer set at 105°C for 3 hours and water percentage was obtained from a weight change before and after the heating.

(Acid Value)

In 50 mL of acetone, 2 g of a sample was added and was stirred for 24 hours at the room temperature. An obtained entire amount was subjected to a centrifugation under condition of rotation number of 20000 rpm, temperature of 0°C and for 180 minutes using a centrifuge (CR20GIII, manufactured by Hitachi Koki) . A supernatant and a precipitate were separated, each thereof was dried under vacuum at 50°C for 8 hours to obtain an acetone soluble matter and an acetone insoluble matter.

In 50 mL of chloroform, 1 g of the acetone soluble matter or the acetone insoluble matter was accurately measured and dissolved. Nitrogen purge was performed for 5 minutes. After that, several drops of bromthymol blue were added. A neutralization titration was performed using an ethanol solution of N/100 KOH.

As a control, 50 mL of chloroform that was subjected to a nitrogen purge for 5 minutes was neutralization titrated in the same manner as the above. By the following formula, acid value C (mmol/g) was calculated.

$$C = (A-B) \times 0.01 \times F$$

wherein, A = a titer in the sample (mL),
B = a titer of the control (mL), and
F = a factor of N/100 KOH ethanol solution

(Hot Water Whitening Resistance (80°C))

A test piece of 50 mm $\times$ 50 mm was cut out of the resin film. The haze ($H_0$) was measured at the room temperature in accordance with JIS K 7136 using a haze meter (HM-150, manufactured by Murakami Color Research Laboratory).

Then, the test piece was immersed in water of 80°C for 1 hour. Thereafter, the water attached to a film surface were removed, and the haze was measured when a temperature of the film returned to the room temperature.

An increment amount ($\Delta H^{80}$) to the haze after hot water immersion from the haze at the room temperature was calculated.

(Boiling Water whitening Resistance)

A test piece of 50 mm $\times$ 50 mm was cut out of the resin film. The haze ($H_0$) was measured at the room temperature in accordance with JIS K 7136 using a haze meter (HM-150, manufactured by Murakami Color Research Laboratory).

Then, the test piece was immersed in water of 100°C for 4 hours. Thereafter, the water attached on a film surface were removed, followed by drying in a hot air dryer set at 100°C for 8 hours. And the haze was measured when a temperature of the film returned to the room temperature.

An increment amount ($\Delta H^{100}$) to the haze after boiling water immersion from the haze at the room temperature was calculated.

In the present working examples, methyl methacrylate is abbreviated as MMA, n-butyl acrylate is abbreviated as nBA, methyl acrylate is abbreviated as MA, allyl methacrylate is abbreviated as ALMA, and n-octyl mercaptan (chain transfer agent) is abbreviated as nOM.

(Production Example 1)

In an autoclave with a stirrer and a sampling tube, 92 parts of purified MMA, and 8 parts of MA were charged to prepare a monomer mixture. To the monomer mixture, 0.006 part of a polymerization initiator (2, 2'-azobis (2-methylpropionitrile), hydrogen abstraction ability: 1%, 1 hour half-life temperature: 83°C) and 0.15 part of nOM were added and dissolved to obtain a raw material liquid. An oxygen gas in a production device was purged by a nitrogen gas.

The raw material liquid was fed from the autoclave to a continuous flow tank reactor controlled to a temperature of 140°C at a constant flow rate such that an average residence time is 120 minutes and was bulk polymerized at a polymerization conversion of 57%, resulting in obtaining an acrylic resin (B1).

The liquid discharged from the tank reactor was heated to 240°C, and fed to a twin screw extruder equipped with an open bent and a vacuum bent controlled to 250°C at a constant flow rate, followed by adiabatic flash vaporization in an extruder feed port. Volatile components (monomers, dimers, trimers and so on) vaporized by the adiabatic flash vaporization were discharged from the open bent. Volatile components (monomers and so on) volatilized by melt kneading with twin screw were discharged from the vacuum bent placed on a downstream side than the extruder feed port and depressurized to 0.8kPa (6 Torr).

The resin component from which the volatile components were nearly almost removed is extruded by the twin screw to obtain a strand, the strand was cut by a pelletizer to pelletize the acrylic resin (B1). The acrylic resin (B1) had Tg of 110°C and MFR of 2 g/10 minutes.

(Production Example 2)

In an autoclave with a stirrer and a sampling tube, 94 parts of purified MMA, and 6 parts of MA were charged to prepare a monomer mixture. To the monomer mixture, 0.006 part of a polymerization initiator (2, 2'-azobis (2-methylpropionitrile), hydrogen abstraction ability: 1%, 1 hour half-life temperature: 83°C) and 0.35 part of nOM were added and dissolved to obtain a raw material liquid. An oxygen gas in a production device was purged by a nitrogen gas.

The raw material liquid was fed from the autoclave to a continuous flow tank reactor controlled to a temperature of 140°C at a constant flow rate such that an average residence time is 120 minutes and was bulk polymerized at a polymerization conversion of 57% to obtain an acrylic resin (B2).

The liquid discharged from the tank reactor was heated to 240°C, and fed to a twin screw extruder equipped with an open bent and a vacuum bent controlled to 250°C at a constant flow rate, followed by adiabatic flash vaporization in an extruder feed port. Volatile components (monomers, dimers, trimers and so on) vaporized by the adiabatic flash vaporization were discharged from the open bent. Volatile components (monomers and so on) volatilized by melt kneading by twin screw were discharged from the vacuum bent placed on a downstream side than the extruder feed port and depressurized to 0.8kPa (6 Torr).

The resin component from which the volatile components were nearly almost removed was extruded by the twin screw to obtain a strand, the strand was cut by a pelletizer to pelletize the acrylic resin (B2). The acrylic resin (B2) had Tg of 112°C and MFR of 10 g/10 minutes.

Example 1

(Step 1)

In a reactor equipped with a stirrer, a thermometer, a nitrogen gas introduction part, a monomer introduction part and a reflux condenser, 150 parts of ion exchange water, 1.3 parts of sodium dodecyl benzene sulfonate and 0.05 part of sodium carbonate were charged, the inside of the reactor was sufficiently substituted with nitrogen gas and a state where an influence of oxygen is essentially null was formed. Thereafter, a temperature in the reactor was set to 80°C. Into the reactor, 0.015 part of potassium persulfate was charged, followed by stirring for 5 minutes. Then, a monomer mixture of 4 parts of MMA, 4 parts of nBA and 0.02 part of ALMA was dropped continuously over 20 minutes to perform an emulsion polymerization. After the end of the dropping, stirring was further performed for 30 minutes such that the conversion of the emulsion polymerization was not lower than 98% to obtain a latex containing a polymer (a).

In the reactor in which the latex containing the polymer (a) is present, 0.030 part of potassium persulfate was added, followed by stirring for 5 minutes. Then, a monomer mixture of 4 parts of MMA, 26 parts of nBA and 0.9 part of ALMA was continuously dropped over 40 minutes to perform a seed emulsion polymerization. After the end of the dropping, further followed by stirring for 30 minutes such that the conversion of the seed emulsion polymerization was not lower than 98% to obtain a latex containing the polymer (a) and a polymer (b).

In the reactor in which the latex containing the polymer (a) and the polymer (b) is present, 0.055 part of potassium persulfate was added, followed by stirring for 5 minutes. After that, a monomer mixture of 56 parts of MMA, 6 parts of nBA and 0.2 part of nOM was continuously dropped over 100 minutes to perform a seed emulsion polymerization. After the end of the dropping, further followed by stirring for 60 minutes such that the conversion of the seed emulsion polymerization was not lower than 98% to obtain a latex (hereinafter, referred to as latex (1)) containing the polymer (a), the polymer (b) and a polymer (c). An average particle size of the latex (1) determined by the light scattering method was 0.09 μm. A monomer unit composition ratio and an average particle size of the latex (1) are shown in Table (1).

[Table 1]

Table 1

| [Step1] | | | Latex [1] | [2] | [3] | [4] | [5] | [6] |
|---|---|---|---|---|---|---|---|---|
| | MMA | [pts] | 4 | 13 | 2.5 | 3 | 2.5 | 4 |
| Polymer (a) | nBA | [pts] | 4 | 2 | 2.5 | 3 | 2.5 | 4 |
| | ALMA | [pts] | 0.02 | 0.03 | 0.015 | 0.015 | 0.01 | 0.015 |
| | MMA | [pts] | 4 | 0 | 2 | 1.5 | 1.5 | 2 |
| Polymer (b) | nBA | [pts] | 26 | 30 | 28 | 28.5 | 28.5 | 28 |
| | ALMA | [pts] | 0.9 | 0.6 | 0.9 | 0.5 | 0.45 | 0.6 |

(continued)

| | | | Latex | | | | | |
|---|---|---|---|---|---|---|---|---|
| Polymer(c) | MMA | [pts] | 56 | 50 | 62 | 56 | 57 | 61 |
| | nBA | [pts] | 6 | 5 | 3 | 4 | 0 | 0 |
| | MA | [pts] | 0 | 0 | 0 | 4 | 8 | 4 |
| | nOM | [pts] | 0.2 | 0.15 | 0.25 | 0.2 | 0.24 | 0.22 |
| Ave. Particle size | | [μm] | 0.09 | 0.09 | 0.09 | 0.09 | 0.09 | 0.09 |

(Step 2)

The latex (1) was frozen by leaving in an atmosphere of -20°C for 4 hours. The obtained frozen product was added into triple volume of water of 80°C to be thawed and obtain a slurry. The slurry was washed and dewatered by centrifugal force of 2100 G using a screw decanter centrifuge. Subsequently, ion exchange water was added to be a slurry concentration of 10%, followed by washing and dewatering again by the screw decanter centrifuge.

Thereafter, the dewatered slurry was dried with a continuous fluid-bed dryer set at 80°C to obtain a core-shell multilayer structure acrylic polymer (hereinafter, expressed as acrylic polymer (A1)). The acrylic polymer (A1) was fed to a single screw extruder with a bent and pelletized under condition of bent vacuum pressure of 0.7 kPa (5 Torr), and a melt extruding temperature of 245°C. The residence time in the extruder was 2.5 minutes.

The pelletized acrylic polymer (A1) was dried at 80°C. The dried acrylic polymer (A1) had water percentage of 0.06% by mass, MFR of 2.0 g/10 minutes, Tg of 93°C, acid value of acetone insoluble matter of 0.004 mmol/g, and acid value of acetone soluble matter of 0.009 mmol/g. Characteristic values of the acrylic polymer (A1) and so on are shown in Table 2.

[Table 2]

Table 2

| | Acrylic polymer | | | | | |
|---|---|---|---|---|---|---|
| [Step2] | [A1] | [A2] | [A3] | [A4] | [A5] | [A6] |
| Latex | [1] | [1] | [1] | [2] | [2] | [2] |
| washing and dewatering | | | | | | |
| Number of washing/dewatering | 2 | 2 | 1 | 2 | 3 | 2 |
| Pelletizing Condition | | | | | | |
| Presence of Bent | Yes | Yes | Yes | Yes | Yes | Yes |
| Extrusion Temp. [°C] | 245 | 245 | 245 | 245 | 245 | 245 |
| Residence Time [min.] | 2.5 | 2.5 | 2.5 | 2.5 | 2.5 | 2.5 |
| Drying Temp. [°C] | 80 | - | 80 | 80 | 80 | - |
| Resin Characteristics | | | | | | |
| Moisture Percentage [%] | 0.06 | 0.16 | 0.06 | 0.06 | 0.06 | 0.3 |
| MFR[g/10min] | 2.0 | 1.8 | 2.0 | 1.8 | 1.8 | 1.8 |
| Tg [°C] | 93 | 93 | 93 | 93 | 93 | 93 |
| Acid Value (insolubles) [mmol/g] | 0.004 | 0.004 | 0.004 | 0.003 | 0.003 | 0.003 |
| Acid Value (solubles) [mmol/g] | 0.009 | 0.009 | 0.010 | 0.009 | 0.008 | 0.009 |

Table 2 (cont.)

| [Step2] | | Acrylic polymer | | | | | |
|---|---|---|---|---|---|---|---|
| | | [A7] | [A8] | [A9] | [A10] | [All] | [A12] |
| Latex | | [2] | [3] | [4] | [5] | [6] | [6] |
| Washing and dewatering | | | | | | | |
| Number of washing/dewatering | | 2 | 2 | 2 | 2 | 2 | 2 |
| Pelletizing Condition | | | | | | | |
| | Presence of Bent | Yes | Yes | Yes | Yes | Yes | Yes |
| | Extrusion Temp. [°C] | 245 | 250 | 245 | 250 | 250 | 250 |
| | Residence Time [min.] | 2.5 | 2.5 | 2.5 | 2.5 | 2.5 | 2.5 |
| | Drying Temp. [°C] | - | 80 | 80 | 80 | 80 | - |
| Resin Characteristics | | | | | | | |
| | Moisture Percentage [%] | 0.15 | 0.05 | 0.05 | 0.05 | 0.05 | 0.05 |
| | MFR [g/10min] | 1.8 | 2.3 | 1.8 | 2.2 | 2.1 | 2.1 |
| | Tg [°C] | 93 | 107 | 93 | 103 | 108 | 108 |
| Acid Value (insolubles) [mmol/g] | | 0.003 | 0.004 | 0.004 | 0.004 | 0.004 | 0.004 |
| Acid Value (solubles) [mmol/g] | | 0.009 | 0.008 | 0.007 | 0.006 | 0.007 | 0.006 |

(Step 3)

70 parts of the dried acrylic polymer (A1), 30 parts of the acrylic polymer (B1), and 2 parts of UV absorber (2,2'-Methylenebis[6-(2H-benzotriazol-2-yl) -4-(1,1,3,3-tetramethylbutyl)phenol], Product Name: LA-31, manufactured by ADEKA Corporation) were mixed. The obtained mixture was fed to a single screw extruder with a bent and molten at 265°C for residence time of 3.5 minutes, followed by extruding from a T die. The extruded film molten resin was wound on a mirrored roll to obtain a resin film having a thickness of 50 um. The obtained resin film had Tg of 100°C, acid value of acetone insoluble matter of 0.012 mmol/g, and acid value of acetone soluble matter of 0.008 mmol/g.

The resin film had haze at the room temperature of 0.4%, $\Delta H^{80}$ of 2.4%, and $\Delta H^{100}$ of 2.3%. It was found that the resin film was excellent in hot-water whitening resistance and boiling water whitening resistance. Results are shown in Table 3.

[Table 3)

Table 3

| [Step3] | | Ex. | | | | | | | |
|---|---|---|---|---|---|---|---|---|---|
| | | 1 | 2 | 3 | 4 | 5 | 6 | 7 | 8 |
| composition ratio | | | | | | | | | |
| | Acrylic polymer [A1] [pts] | 70 | 90 | 80 | 70 | 100 | | | |
| | Acrylic polymer [A4] [pts] | | | | | | 90 | | |
| | Acrylic polymer [A5] [pts] | | | | | | | 100 | |
| | Acrylic polymer [A8] [pts] | | | | | | | | 100 |
| | Acrylic resin [B1] [pts] | 30 | 10 | 20 | | | 10 | | |
| | Acrylic resin [B2] [pts] | | | | 30 | | | | |
| | UV Absorber [pts] | 2 | 2 | 2 | 2 | 2 | 2 | 2 | |

(continued)

| | Ex. | | | | | | | |
|---|---|---|---|---|---|---|---|---|
| **Film Formation Condition** | | | | | | | | |
| Presence of Bent | Yes | Yes | Yes | Yes | Yes | Yes | Yes | Yes |
| Film Formation Temperature [°C] | 265 | 265 | 270 | 260 | 270 | 270 | 270 | 270 |
| Residence Time [min.] | 3.5 | 3 | 3.5 | 3 | 4 | 5 | 4 | 3 |
| **Film Characteristics** | | | | | | | | |
| Film Thickness [$\mu$m] | 50 | 55 | 50 | 60 | 50 | 50 | 50 | 50 |
| Tg [°C] | 100 | 96 | 98 | 102 | 93 | 96 | 93 | 105 |
| Acid Value (insolubles) [mmol/g] | 0.012 | 0.013 | 0.012 | 0.011 | 0.013 | 0.013 | 0.012 | 0.012 |
| Acid Value (solubles) [mmol/g] | 0.008 | 0.009 | 0.008 | 0.008 | 0.009 | 0.009 | 0.008 | 0.008 |
| $H_0$ [%] | 0.4 | 0.4 | 0.4 | 0.4 | 0.4 | 0.4 | 0.3 | 0.4 |
| $\Delta H^{80}$ [%] | 2.4 | 2.7 | 2.5 | 2.1 | 2.9 | 3.2 | 1.9 | 2.5 |
| $\Delta H^{100}$ [%] | 2.3 | 2.5 | 2.7 | 2.2 | 3.5 | 3.9 | 2.2 | 3.1 |

Example 2

A resin film was obtained in the same manner as in example 1 except that the amounts of the acrylic polymer (A1) and the acrylic resin (B1) in the step 3 were changed to 90 parts and 10 parts respectively, the residence time in the single screw extruder with the bent in the step 3 was changed to 3.0 minutes, and the film thickness was changed to 55 $\mu$m. Characteristics of the obtained resin film are shown in Table 3.

Example 3

A resin film was obtained in the same manner as in example 1 except that the amounts of the acrylic polymer (A1) and the acrylic resin (B1) in the step 3 were changed to 80 parts and 20 parts respectively, and the melting temperature in the single screw extruder with the bent in the step 3 was changed to 270°C. Characteristics of the obtained resin film are shown in Table 3.

Example 4

A resin film was obtained in the same manner as in example 1 except that the acrylic resin (B1) in the step 3 was changed to the,acrylic resin (B2), the melting temperature in the single screw extruder with the bent was changed to 260°C, the residence time was changed to 3.0 minutes, and the film thickness was changed to 60 $\mu$m in the step 3. Characteristics of the obtained resin film are shown in Table 3.

Example 5

A resin film was obtained in the same manner as in example 1 except that the amounts of the acrylic polymer (A1) and the acrylic resin (B1) were changed to 100 parts and 0 part respectively, the melting temperature in the single screw extruder with the bent was changed to 270°C, and the residence time was changed to 4. 0 minutes in the step 3. Characteristics of the obtained resin film are shown in Table 3.

Example 6

A latex (2) was obtained in the same manner as in the step 1 of example 1 except that the monomer mixture in the step 1 was changed to that as shown in Table 1. An average particle size of the latex (2) determined by the light scattering method was 0.09 um.

A core-shell multilayer structure acrylic polymer (hereinafter, referred to as acrylic polymer (A4)) was obtained in the same manner as in the step 2 of example 1 except that the latex (2) was used in the place of the latex (1). Characteristics of the acrylic polymer (A4) are shown in Table 2.

A resin film was obtained in the same manner as in example 1 except that 70 parts of the acrylic polymer (A1) and 30 parts of the acrylic resin (B1) were changed to 90 parts of the acrylic polymer (A4) and 10 parts of the acrylic resin (B1), the melting temperature in the single screw extruder with the bent was changed to 270°C, and the residence time was changed to 5.0 minutes in the step 3. Characteristics of the obtained resin film are shown in Table 3.

Example 7

A core-shell multilayer structure acrylic polymer (hereinafter referred to as acrylic polymer (A5)) was obtained in the same manner as in the step 2 of example 6 except that the number of washing and dewatering was changed to three times. Characteristics of the acrylic polymer (A5) are shown in Table 2.

A resin film was obtained in the same manner as in example 6 except that 90 parts of the acrylic polymer (A4) and 10 parts of the acrylic resin (B1) were changed to 100 parts of the acrylic polymer (A5), and the residence time in the single screw extruder with the bent in the step 3 was changed to 4.0 minutes. Characteristics of the obtained resin film are shown in Table 3.

Example 8

A latex (3) was obtained in the same manner as in the step 1 of example 1 except that the monomer mixture in the step 1 of example 1 was changed to that shown in Table 1. An average particle size of the latex (3) determined by the light scattering method was 0.09 $\mu$m.

A core-shell multilayer structure acrylic polymer (hereinafter, expressed as acrylic polymer (A8)) was obtained in the same manner as in the step 2 of example 1 except that the latex (3) was used in the place of the latex (1) and the melt extrusion temperature was changed to 250°C. Characteristics of the acrylic polymer (A8) are shown in Table 2.

A resin film was obtained in the same manner as in example 1 except that 70 parts of the acrylic polymer (A1), 30 parts of the acrylic resin (B1) and 2 parts of the UV absorber were changed to 100 parts of the acrylic polymer (A8), the melting temperature in the single screw extruder with the bent was changed to 270°C, and the residence time was changed to 3.0 minutes in the step 3. Characteristics of the obtained resin film are shown in Table 3.

Example 9

A resin film was obtained in the same manner as in example 8 except that 100 parts of the acrylic polymer (A8) were changed to 70 parts of the acrylic polymer (A8) and 30 parts of the acrylic resin (B2), the melting temperature in the single screw extruder with the bent was changed to 265°C, and the residence time was changed to 2.5 minutes in the step 3. Characteristics of the obtained resin film are shown in Table 4.

[Table 4)

Table 4

| [Step3] | Ex. | | | | | | |
| --- | --- | --- | --- | --- | --- | --- | --- |
| | 9 | 10 | 11 | 12 | 13 | 14 | 15 |
| composition ratio | | | | | | | |
| Acrylic polymer [A2] [pts] | | 100 | | | | | |
| Acrylic polymer [A8] [pts] | 70 | | | | | | |
| Acrylic polymer [A9] [pts] | | | 100 | | | | |

(continued)

| | | | | | Ex. | | | |
|---|---|---|---|---|---|---|---|---|
| Acrylic polymer [A10] [pts] | | | | | 100 | 85 | | |
| Acrylic polymer [A11] [pts] | | | | | | | 88 | |
| Acrylic polymer [A12] [pts] | | | | | | | | 100 |
| Acrylic resin [B2] [pts] | 30 | | | | | 15 | 12 | |
| UV Absorber [pts] | | 2 | 2 | | 3 | 2 | 2 | |
| | | | | | | | | |
| **Film Formation Condition** | | | | | | | | |
| Presence of Bent | Yes | Yes | Yes | Yes | Yes | Yes | Yes | |
| Film Formation Temperature [°C] | 265 | 260 | 270 | 265 | 265 | 265 | 260 | |
| Residence Time [min.] | 2.5 | 2 | 3 | 3.5 | 3 | 3.5 | 2.5 | |
| | | | | | | | | |
| **Film Characteristics** | | | | | | | | |
| Film Thickness [$\mu$m] | 50 | 50 | 50 | 50 | 50 | 50 | 50 | |
| Tg [°C] | 108 | 93 | 98 | 103 | 108 | 110 | 108 | |
| Acid Value (insolubles) [mmol/g] | 0.012 | 0.011 | 0.011 | 0.010 | 0.011 | 0.011 | 0.012 | |
| Acid Value (solubles) [mmol/g] | 0.007 | 0.007 | 0.007 | 0.006 | 0.006 | 0.006 | 0.007 | |
| | | | | | | | | |
| $H_0$ [%] | 0.4 | 0.4 | 0.4 | 0.4 | 0.4 | 0.4 | 0.4 | |
| $\Delta H^{80}$ [%] | 1.8 | 2.8 | 2.6 | 1.8 | 1.7 | 1.4 | 2 | |
| $\Delta H^{100}$ [%] | 2.1 | 3.3 | 3.0 | 2.2 | 2.0 | 1.9 | 2.5 | |

Reference Example 10

A core-shell multilayer structure acrylic polymer (hereinafter, expressed as acrylic polymer (A2)) was obtained in the same manner as in the step 2 of example 1 except that the drying at 80°C in the step 2 was not performed. Characteristics of the acrylic polymer (A2) are shown in Table 2.

A resin film was obtained in the same manner as in example 1 except that 70 parts of the acrylic polymer (A1) and 30 parts of the acrylic resin (B1) were changed to 100 parts of the acrylic polymer (A2), the melting temperature in the single screw extruder with the bent was changed to 260°C, and the residence time was changed to 2.0 minutes in the step 3. Characteristics of the obtained resin film are shown in Table 4.

Example 11

A latex (4) was obtained in the same manner as in the step 1 of example 1 except that the monomer mixture in the step 1 of example 1 was changed to that shown in Table 1. An average particle size of the latex (4) determined by the light scattering method was 0.09 um.

A core-shell multilayer structure acrylic polymer (hereinafter, expressed as acrylic polymer (A9)) was obtained in the same manner as in the step 2 of example 1 except that the latex (4) was used in the place of the latex (1). Characteristics of the acrylic polymer (A9) are shown in Table 2.

A resin film was obtained in the same manner as in example 10 except that 100 parts of the acrylic polymer (A2) were changed to 100 parts of the acrylic polymer (A9), the melting temperature in the single screw extruder with the bent was changed to 270°C, and the residence time was changed to 3.0 minutes in the step 3. Characteristics of the obtained resin film are shown in Table 4.

Example 12

A latex (5) was obtained in the same manner as in the step 1 of example 1 except that the monomer mixture in the step 1 of example 1 was changed to that shown in Table 1. An average particle size of the latex (5) determined by the light scattering method was 0.09 um.

A core-shell multilayer structure acrylic polymer (hereinafter, expressed as acrylic polymer (A10)) was obtained in the same manner as in the step 2 of example 1 except that the latex (5) was used in the place of the latex (1) and the melt extrusion temperature was changed to 250°C. Characteristics of the acrylic polymer (A10) are shown in Table 2.

A resin film was obtained in the same manner as in example 8 except that 100 parts of the acrylic polymer (A8) were changed to 100 parts of the acrylic polymer (A10), the melting temperature in the single screw extruder with the bent was changed to 265°C, and the residence time was changed to 3.5 minutes in the step 3. Characteristics of the obtained resin film are shown in Table 4.

Example 13

A resin film was obtained in the same manner as in example 2 except that 90 parts of the acrylic polymer (A1), 10 parts of the acrylic resin (B1) and 2 parts of the UV absorber were changed to 85 parts of the acrylic polymer (A10), 15 parts of the acrylic resin (B2) and 3 parts of the UV absorber. Characteristics of the obtained resin film are shown in Table 4.

Example 14

A latex (6) was obtained in the same manner as in the step 1 of example 1 except that the monomer mixture in the step 1 of example 1 was changed to that shown in Table 1. An average particle size of the latex (6) determined by the light scattering method was 0.09 $\mu$m.

A core-shell multilayer structure acrylic polymer (hereinafter, expressed as acrylic polymer (A11)) was obtained in the same manner as in the step 2 of example 1 except that the latex (6) was used in the place of the latex (1) and the melt extrusion temperature was changed to 250°C. Characteristics of the acrylic polymer (A11) are shown in Table 2.

A resin film was obtained in the same manner as in example 1 except that 70 parts of the acrylic polymer (A1) and 30 parts of the acrylic resin (B1) were changed to 88 parts of the acrylic polymer (A11) and 12 parts of the acrylic resin (B2). Characteristics of the obtained resin film are shown in Table 4.

Example 15

A core-shell multilayer structure acrylic polymer (hereinafter, expressed as acrylic polymer (A12)) was obtained in the same manner as in the step 2 of example 1 except that the latex (6) was used in the place of the latex (1), the melt extrusion temperature was changed to 250°C, and the drying at 80°C was not performed. Characteristics of the acrylic polymer (A12) are shown in Table 2.

A resin film was obtained in the same manner as in example 10 except that 100 parts of the acrylic polymer (A2) were changed to 100 parts of the acrylic polymer (A12) and the residence time was changed to 2.5 minutes. Characteristics of the obtained resin film are shown in Table 4.

Comparative Example 1

A resin film was obtained in the same manner as in example 1 except that the residence time in the extruder in the step 3 of example 1 was changed to 18 minutes. Characteristics of the obtained resin film are shown in Table 5.

[Table 5]

Table 5

| [Step3] | Comp. Ex. | | | | | |
|---|---|---|---|---|---|---|
| | 1 | 2 | 3 | 4 | 5 | 6 |
| composition ratio | | | | | | |
| Acrylic polymer [A1] [pts] | 70 | | 100 | | | |

(continued)

| | Comp. Ex. | | | | | |
|---|---|---|---|---|---|---|
| Acrylic polymer [A3] [pts] | 100 | | | | | |
| Acrylic polymer [A6] [pts] | | | | 90 | | 80 |
| Acrylic polymer [A7] [pts] | | | | | 90 | |
| Acrylic resin [B1] [pts] | 30 | | | 10 | 10 | 20 |
| UV Absorber [pts] | 2 | | | 2 | 2 | 2 |
| **Film Formation Condition** | | | | | | |
| Presence of Bent | Yes | Yes | Yes | Yes | No | Yes |
| Film Formation Temperature [°C] | 265 | 265 | 290 | 270 | 270 | 270 |
| Residence Time [min.] | 18 | 6 | 4 | 10 | 18 | 5 |
| **Film Characteristics** | | | | | | |
| Film Thickness [$\mu$m] | 50 | 50 | 45 | 50 | 50 | 50 |
| Tg [°C] | 100 | 93 | 93 | 96 | 96 | 96 |
| Acid Value (insolubles) [mmol/g] | 0.022 | 0.019 | 0.021 | 0.024 | 0.025 | 0.023 |
| Acid Value (solubles) [mmol/g] | 0.007 | 0.009 | 0.008 | 0.008 | 0.009 | 0.008 |
| $H_0$ [%] | 0.4 | 0.5 | 0.4 | 0.4 | 0.4 | 0.4 |
| $\Delta H^{80}$ [%] | 20.5 | 25.9 | 32 | 21.5 | 23.8 | 40.4 |
| $\Delta H^{100}$ [%] | 41.5 | 58.0 | 55.3 | 49.2 | 54.2 | 60.5 |

Comparative Example 2

A core-shell multilayer structure acrylic polymer (hereinafter, expressed as acrylic polymer (A3)) was obtained in the same manner as in the step 2 of example 1 except that the number of the washing and dewatering in the step 2 was changed to one time. Characteristics of the acrylic polymer (A3) are shown in Table 2.
A resin film was obtained in the same manner as in example 1 except that 70 parts of the acrylic polymer (A1), 30 parts of the acrylic resin (B1) and 2 parts of the UV absorber were changed to 100 parts of the acrylic polymer (A3), and the residence time in the single screw extruder with the bent was changed to 6.0 minutes in the step 3. Characteristics of the obtained resin film are shown in Table 5.

Comparative Example 3

A resin film was obtained in the same manner as in example 1 except that 70 parts of the acrylic polymer (A1), 30 parts of the acrylic resin (B1) and 2 parts of the UV absorber were changed to 100 parts of the acrylic polymer (A1), the melting temperature in the single screw extruder with the bent was changed to 290°C, and the residence time was changed to 4.0 minutes in the step 3. Characteristics of the obtained resin film are shown in Table 5.

Comparative Example 4

A core-shell multilayer structure acrylic polymer (hereinafter, expressed as acrylic polymer (A6)) was obtained in the same manner as in the step 2 of example 6 except that the drying at 80°C in the step 2 was not performed.

Characteristics of the acrylic polymer (A6) are shown in Table 2.

A resin film was obtained in the same manner as in example 6 except that 90 parts of the acrylic polymer (A4) were changed to 90 parts of the acrylic polymer (A6), and the residence time in the single screw extruder with the bent was changed to 10.0 minutes in the step 3. Characteristics of the obtained resin film are shown in Table 5.

Comparative Example 5

A core-shell multilayer structure acrylic polymer (hereinafter, expressed as acrylic polymer (A7)) was obtained in the same manner as in the step 2 of example 6 except that the drying at 80°C in the step 2 was changed to natural drying. Characteristics of the acrylic polymer (A7) are shown in Table 2.

A resin film was obtained in the same manner as in example 6 except that 90 parts of the acrylic polymer (A4) were changed to 90 parts of the acrylic polymer (A7), and the residence time in the single screw extruder with the bent was changed to 18.0 minutes in the step 3. Characteristics of the obtained resin film are shown in Table 5.

Comparative Example 6

A resin film was obtained in the same manner as in comparative example 4 except that, in the step 3 of comparative example 4, the amounts of the acrylic polymer (A6) and the acrylic resin (B1) were changed to 80 parts and 20 parts respectively, and the residence time in the extruder was changed to 5 minutes. Characteristics of the obtained resin film are shown in Table 5.

**Claims**

1. A resin film comprising a multilayer structure acrylic polymer, and the resin film having an acid value of not more than 0.018 mmol/g in an acetone insoluble matter, an acid value of not more than 0.012 mmol/g in an acetone soluble matter, a glass transition temperature of not less than 80°C, a haze variation width ($\Delta H^{80}$) before and after a hot water whitening resistance test with water of 80°C of 5% or less, a haze variation width ($\Delta H^{100}$) before and after a boiling water whitening resistance test with water of 100°C of 5% or less, and a thickness of 5 to 300 μm,

   wherein the multilayer structure acrylic polymer comprises a polymer (a), a polymer (b) and a polymer (c),

   the polymer (a) is a polymer composed of 40 to 98.99% by mass of a structural unit derived from methyl methacrylate, 1 to 60% by mass of a structural unit derived from an alkyl acrylate having a 1 to 8 carbon alkyl group, 0.01 to 1% by mass of a structural unit derived from a grafting agent, and 0 to 0.5% by mass of a structural unit derived from a crosslinking agent;

   the polymer (b) is a polymer composed of 70 to 99.5% by mass of a structural unit derived from an alkyl acrylate having a 1 to 8 carbon alkyl group, 0 to 30% by mass of a structural unit derived from methyl methacrylate, 0.5 to 5% by mass of a structural unit derived from a grafting agent, and 0 to 5% by mass of a structural unit derived from a crosslinking agent; and

   the polymer (c) is a polymer composed of 80 to 99% by mass of a structural unit derived from methyl methacrylate, and 1 to 20% by mass of a structural unit derived from an alkyl acrylate having a 1 to 8 carbon alkyl group and having a glass transition temperature of not less than 80°C, wherein the resin film is obtainable by a production method comprising:

   polymerizing 40 to 98.99% by mass of methyl methacrylate, 1 to 60% by mass of an alkyl acrylate having a 1 to 8 carbon alkyl group, 0.01 to 1% by mass of a grafting agent and 0 to 0.5% by mass of a crosslinking agent in the presence of an emulsifying agent to obtain a latex (I) containing the polymer (a);

   polymerizing 70 to 99.5% by mass of an alkyl acrylate having a 1 to 8 carbon alkyl group, 0 to 30% by mass of methyl methacrylate, 0.5 to 5% by mass of a grafting agent and 0 to 5% by mass of a crosslinking agent in the presence of the latex (I) to obtain a latex (II) containing the polymer (a) and the polymer (b);

   polymerizing 80 to 99% by mass of methyl methacrylate and 1 to 20% by mass of an alkyl acrylate having a 1 to 8 carbon alkyl group in the presence of the latex (II) to obtain a latex (III) containing the polymer (a), the polymer (b) and the polymer (c);

   coagulating the latex (III) to obtain a slurry;

   washing and dewatering the slurry;

   drying the dewatered slurry to remove a multilayer structure acrylic polymer comprising the polymer (a), the polymer (b) and the polymer (c); and

   melting and extrusion molding a mixture of 0 to 35% by mass of an acrylic resin and 65 to 100% by mass of the removed multilayer structure acrylic polymer,

wherein the method comprises:

after the drying of the dewatered slurry to remove the multilayer structure acrylic polymer comprising the polymer (a), the polymer (b) and the polymer (c), feeding the removed multilayer structure acrylic polymer to an extruder to be pelletized; and

drying the pelletized multilayer structure acrylic polymer to be used for producing the mixture,

wherein the drying of the slurry or the drying of the pelletized multilayer structure acrylic polymer is performed so that a moisture percentage is less than 0.1% by mass,

the washing and dewatering of the slurry are repeatedly performed so that the removed multilayer structure acrylic polymer has an acid value of not more than 0.008 mmol/g in an acetone insoluble matter and an acid value of not more than 0.012 mmol/g in an acetone soluble matter, and

the extrusion molding is performed using an extruder with a residence time of not more than 5 minutes and a resin temperature of not higher than 280°C in the extruder,

wherein the acid value, the glass transition temperature and the haze variation width are measured as specified in the description.

2. The resin film according to claim 1, wherein the washing and dewatering of the slurry are performed at least twice by use of a screw decanter centrifuge.

3. A production method of a resin film,

wherein the resin film comprises a multilayer structure acrylic polymer, and the resin film has an acid value of not more than 0.018 mmol/g in an acetone insoluble matter, an acid value of not more than 0.012 mmol/g in an acetone soluble matter, a glass transition temperature of not less than 80°C, a haze variation width ($\Delta H^{80}$) before and after a hot water whitening resistance test with water of 80°C of 5% or less, a haze variation width ($\Delta H^{100}$) before and after a boiling water whitening resistance test with water of 100°C of 5% or less, and a thickness of 5 to 300 $\mu$m,

wherein the multilayer structure acrylic polymer comprises a polymer (a), a polymer (b) and a polymer (c),

the polymer (a) is a polymer composed of 40 to 98.99% by mass of a structural unit derived from methyl methacrylate, 1 to 60% by mass of a structural unit derived from an alkyl acrylate having a 1 to 8 carbon alkyl group, 0.01 to 1% by mass of a structural unit derived from a grafting agent, and 0 to 0.5% by mass of a structural unit derived from a crosslinking agent;

the polymer (b) is a polymer composed of 70 to 99.5% by mass of a structural unit derived from an alkyl acrylate having a 1 to 8 carbon alkyl group, 0 to 30% by mass of a structural unit derived from methyl methacrylate, 0.5 to 5% by mass of a structural unit derived from a grafting agent, and 0 to 5% by mass of a structural unit derived from a crosslinking agent; and

the polymer (c) is a polymer composed of 80 to 99% by mass of a structural unit derived from methyl methacrylate, and 1 to 20% by mass of a structural unit derived from an alkyl acrylate having a 1 to 8 carbon alkyl group and having a glass transition temperature of not less than 80°C,

the method comprising:

polymerizing 40 to 98,99% by mass of methyl methacrylate, 1 to 60% by mass of an alkyl acrylate having a 1 to 8 carbon alkyl group, 0.01 to 1% by mass of a grafting agent and 0 to 0.5% by mass of a crosslinking agent in the presence of an emulsifying agent to obtain a latex (I) containing the polymer (a);

polymerizing 70 to 99.5% by mass of an alkyl acrylate having a 1 to 8 carbon alkyl group, 0 to 30% by mass of methyl methacrylate, 0.5 to 5% by mass of a grafting agent and 0 to 5% by mass of a crosslinking agent in the presence of the latex (I) to obtain a latex (II) containing the polymer (a) and the polymer (b);

polymerizing 80 to 99% by mass of methyl methacrylate and 1 to 20% by mass of an alkyl acrylate having a 1 to 8 carbon alkyl group in the presence of the latex (II) to obtain a latex (III) containing the polymer (a), the polymer (b) and the polymer (c);

coagulating the latex (III) to obtain a slurry;

washing and dewatering the slurry;

drying the dewatered slurry to remove a multilayer structure acrylic polymer comprising the polymer (a), the polymer (b) and the polymer (c); and

melting and extrusion molding a mixture of 0 to 35% by mass of an acrylic resin and 65 to 100% by mass of the removed multilayer structure acrylic polymer,

wherein the method comprises:

after the drying of the dewatered slurry to remove the multilayer structure acrylic polymer comprising the polymer (a), the polymer (b) and the polymer (c), feeding the removed multilayer structure acrylic polymer to an extruder to be pelletized; and
drying the pelletized multilayer structure acrylic polymer to be used for producing the mixture,
wherein the drying of the slurry or the drying of the pelletized multilayer structure acrylic polymer is performed so that a moisture percentage is less than 0.1% by mass,
the washing and dewatering of the slurry are repeatedly performed so that the removed multilayer structure acrylic polymer has an acid value of not more than 0.008 mmol/g in an acetone insoluble matter and an acid value of not more than 0.012 mmol/g in an acetone soluble matter, and
the extrusion molding is performed using an extruder with a residence time of not more than 5 minutes and a resin temperature of not higher than 280°C in the extruder.

4. The production method of the resin film according to claim 3, wherein the washing and dewatering of the slurry are performed at least twice by use of a screw decanter centrifuge.

5. A layered product comprising:

at least one layer of the resin film according to claim 1 or 2; and
at least one layer of a shaped product of another thermoplastic polymer.

6. The layered product according to claim 5, wherein the other thermoplastic polymer is at least one selected from polycarbonate polymers, vinyl chloride polymers, vinylidene fluoride polymers, vinyl acetate polymers, maleic acid copolymers, methacrylic resins, ABS resins, AES resins, and AS resins.

**Patentansprüche**

1. Harzfilm, umfassend ein Acrylpolymer mit Mehrschichtstruktur, wobei der Harzfilm einen Säurewert von nicht mehr als 0,018 mmol/g in einer acetonunlöslichen Substanz, einen Säurewert von nicht mehr als 0,012 mmol/g in einer acetonlöslichen Substanz, eine Glasübergangstemperatur von nicht weniger als 80°C, eine Trübungsschwankungsbreite ($\Delta H^{80}$) vor und nach einem Heißwasser-Bleichbeständigkeitstest mit Wasser von 80°C von 5% oder weniger, eine Trübungsschwankungsbreite ($\Delta H^{100}$) vor und nach einem Siedewasser-Bleichbeständigkeitstest mit Wasser von 100°C von 5% oder weniger und eine Dicke von 5 bis 300 $\mu$m aufweist,

wobei das Acrylpolymer mit Mehrschichtstruktur ein Polymer (a), ein Polymer (b) und ein Polymer (c) umfasst,
wobei das Polymer (a) ein Polymer ist, das aus 40 bis 98,99 Massen-% einer Struktureinheit, die von Methylmethacrylat abgeleitet ist, 1 bis 60 Massen-% einer Struktureinheit, die von einem Alkylacrylat mit einer Alkylgruppe mit 1 bis 8 Kohlenstoffatomen abgeleitet ist, 0,01 bis 1 Massen-% einer Struktureinheit, die von einem Pfropfmittel abgeleitet ist, und 0 bis 0,5 Massen-% einer Struktureinheit, die von einem Vernetzungsmittel abgeleitet ist, zusammengesetzt ist;
wobei das Polymer (b) ein Polymer ist, das aus 70 bis 99,5 Massen-% einer Struktureinheit, die von einem Alkylacrylat mit einer Alkylgruppe mit 1 bis 8 Kohlenstoffatomen abgeleitet ist, 0 bis 30 Massen-% einer Struktureinheit, die von Methylmethacrylat abgeleitet ist, 0,5 bis 5 Massen-% einer Struktureinheit, die von einem Pfropfmittel abgeleitet ist, und 0 bis 5 Massen-% einer Struktureinheit, die von einem Vernetzungsmittel abgeleitet ist, zusammengesetzt ist; und
wobei das Polymer (c) ein Polymer ist, das aus 80 bis 99 Massen-% einer Struktureinheit, die von Methylmethacrylat abgeleitet ist, und 1 bis 20 Massen-% einer Struktureinheit, die von einem Alkylacrylat mit einer Alkylgruppe mit 1 bis 8 Kohlenstoffatomen abgeleitet ist, zusammengesetzt ist und eine Glasübergangstemperatur von nicht weniger als 80°C aufweist,
wobei der Harzfilm durch ein Herstellungsverfahren erhältlich ist, umfassend:

das Polymerisieren von 40 bis 98,99 Massen-% Methylmethacrylat, 1 bis 60 Massen-% eines Alkylacrylats mit einer Alkylgruppe mit 1 bis 8 Kohlenstoffatomen, 0,01 bis 1 Massen-% eines Pfropfmittels und 0 bis 0,5 Massen-% eines Vernetzungsmittels in Gegenwart eines Emulgators, um einen Latex (I), enthaltend das Polymer (a), zu erhalten;

das Polymerisieren von 70 bis 99,5 Massen-% eines Alkylacrylats mit einer Alkylgruppe mit 1 bis 8 Kohlenstoffatomen, 0 bis 30 Massen-% Methylmethacrylat, 0,5 bis 5 Massen-% eines Pfropfmittels und 0 bis 5 Massen-% eines Vernetzungsmittels in Gegenwart des Latex (I), um einen Latex (II), enthaltend das Polymer (a) und das Polymer (b), zu erhalten;

das Polymerisieren von 80 bis 99 Massen-% Methylmethacrylat und 1 bis 20 Massen-% eines Alkylacrylats mit einer Alkylgruppe mit 1 bis 8 Kohlenstoffatomen in Gegenwart des Latex (II), um einen Latex (III), enthaltend das Polymer (a), das Polymer (b) und das Polymer (c), zu erhalten;

das Koagulieren des Latex (III), um eine Aufschlämmung zu erhalten;

das Waschen und Entwässern der Aufschlämmung;

das Trocknen der entwässerten Aufschlämmung, um ein Acrylpolymer mit Mehrschichtstruktur, umfassen das Polymer (a), das Polymer (b) und das Polymer (c), zu entfernen; und

das Schmelzen und Extrusionsformen eines Gemischs von 0 bis 35 Massen-% eines Acrylharzes und 65 bis 100 Massen-% des entfernten Acrylpolymers mit Mehrschichtstruktur,

wobei das Verfahren umfasst:

nach dem Trocknen der entwässerten Aufschlämmung zum Entfernen des Acrylpolymers mit Mehrschichtstruktur, umfassend das Polymer (a), das Polymer (b) und das Polymer (c), das Zuführen des entfernten Acrylpolymers mit Mehrschichtstruktur zu einem Extruder, um es zu pelletieren; und

das Trocknen des pelletierten Acrylpolymers mit Mehrschichtstruktur, das für die Herstellung des Gemischs verwendet werden soll,

wobei das Trocknen der Aufschlämmung oder das Trocknen des pelletierten Acrylpolymers mit Mehrschichtstruktur so durchgeführt wird, dass ein Feuchtigkeitsprozentsatz weniger als 0,1 Massen-% beträgt,

das Waschen und Entwässern der Aufschlämmung wiederholt durchgeführt werden, so dass das entfernte Acrylpolymer mit Mehrschichtstruktur einen Säurewert von nicht mehr als 0,008 mmol/g in einer acetonunlöslichen Substanz und einen Säurewert von nicht mehr als 0,012 mmol/g in einer acetonlöslichen Substanz aufweist, und

das Extrusionsformen unter Verwendung eines Extruders mit einer Verweilzeit von nicht mehr als 5 Minuten und einer Harztemperatur von nicht mehr als 280°C in dem Extruder durchgeführt wird,

wobei der Säurewert, die Glasübergangstemperatur und die Trübungsschwankungsbreite gemessen werden, wie in der Beschreibung angegeben.

2. Harzfilm nach Anspruch 1, wobei das Waschen und Entwässern der Aufschlämmung mindestens zweimal unter Verwendung einer Schneckendekantierzentrifuge durchgeführt werden.

3. Verfahren zur Herstellung eines Harzfilms,

wobei der Harzfilm ein Acrylpolymer mit Mehrschichtstruktur umfasst und der Harzfilm einen Säurewert von nicht mehr als 0,018 mmol/g in einer acetonunlöslichen Substanz, einen Säurewert von nicht mehr als 0,012 mmol/g in einer acetonlöslichen Substanz, eine Glasübergangstemperatur von nicht weniger als 80°C, eine Trübungsschwankungsbreite ($\Delta H^{80}$) vor und nach einem Heißwasser-Bleichbeständigkeitstest mit Wasser von 80°C von 5% oder weniger, eine Trübungsschwankungsbreite ($\Delta H^{100}$) vor und nach einem Siedewasser-Bleichbeständigkeitstest mit Wasser von 100°C von 5% oder weniger und eine Dicke von 5 bis 300 $\mu$m aufweist,

wobei das Acrylpolymer mit Mehrschichtstruktur ein Polymer (a), ein Polymer (b) und ein Polymer (c) umfasst,

wobei das Polymer (a) ein Polymer ist, das aus 40 bis 98,99 Massen-% einer Struktureinheit, die von Methylmethacrylat abgeleitet ist, 1 bis 60 Massen-% einer Struktureinheit, die von einem Alkylacrylat mit einer Alkylgruppe mit 1 bis 8 Kohlenstoffatomen abgeleitet ist, 0,01 bis 1 Massen-% einer Struktureinheit, die von einem Pfropfmittel abgeleitet ist, und 0 bis 0,5 Massen-% einer Struktureinheit, die von einem Vernetzungsmittel abgeleitet ist, zusammengesetzt ist;

das Polymer (b) ein Polymer ist, das aus 70 bis 99,5 Massen-% einer Struktureinheit, die von einem Alkylacrylat mit einer Alkylgruppe mit 1 bis 8 Kohlenstoffatomen abgeleitet ist, 0 bis 30 Massen-% einer Struktureinheit, die von Methylmethacrylat abgeleitet ist, 0,5 bis 5 Massen-% einer Struktureinheit, die von einem Pfropfmittel abgeleitet ist, und 0 bis 5 Massen-% einer Struktureinheit, die von einem Vernetzungsmittel abgeleitet ist, zusammengesetzt ist; und

das Polymer (c) ein Polymer ist, das aus 80 bis 99 Massen-% einer Struktureinheit, die von Methylmethacrylat abgeleitet ist, und 1 bis 20 Massen-% einer Struktureinheit, die von einem Alkylacrylat mit einer Alkylgruppe mit 1 bis 8 Kohlenstoffatomen abgeleitet ist, zusammengesetzt ist und eine Glasübergangstemperatur von nicht weniger als 80°C aufweist,
das Verfahren umfassend:

das Polymerisieren von 40 bis 98,99 Massen-% Methylmethacrylat, 1 bis 60 Massen-% eines Alkylacrylats mit einer Alkylgruppe mit 1 bis 8 Kohlenstoffatomen, 0,01 bis 1 Massen-% eines Pfropfmittels und 0 bis 0,5 Massen-% eines Vernetzungsmittels in Gegenwart eines Emulgators, um einen Latex (I), enthaltend das Polymer (a), zu erhalten;

das Polymerisieren von 70 bis 99,5 Massen-% eines Alkylacrylats mit einer Alkylgruppe mit 1 bis 8 Kohlenstoffatomen, 0 bis 30 Massen-% Methylmethacrylat, 0,5 bis 5 Massen-% eines Pfropfmittels und 0 bis 5 Massen-% eines Vernetzungsmittels in Gegenwart des Latex (I), um einen Latex (II), enthaltend das Polymer (a) und das Polymer (b), zu erhalten;

das Polymerisieren von 80 bis 99 Massen-% Methylmethacrylat und 1 bis 20 Massen-% eines Alkylacrylats mit einer Alkylgruppe mit 1 bis 8 Kohlenstoffatomen in Gegenwart des Latex (II), um einen Latex (III), enthaltend das Polymer (a), das Polymer (b) und das Polymer (c), zu erhalten;

das Koagulieren des Latex (III), um eine Aufschlämmung zu erhalten,
das Waschen und Entwässern der Aufschlämmung;
das Trocknen der entwässerten Aufschlämmung, um ein Acrylpolymer mit Mehrschichtstruktur, umfassend das Polymer (a), das Polymer (b) und das Polymer (c), zu entfernen; und
das Schmelzen und Extrusionsformen eines Gemischs von 0 bis 35 Massen-% eines Acrylharzes und 65 bis 100 Massen-% des entfernten Acrylpolymers mit Mehrschichtstruktur,
wobei das Verfahren umfasst:

nach dem Trocknen der entwässerten Aufschlämmung zum Entfernen des Acrylpolymers mit Mehrschichtstruktur, umfassend das Polymer (a), das Polymer (b) und das Polymer (c), das Zuführen des entfernten Acrylpolymers mit Mehrschichtstruktur zu einem Extruder, um es zu pelletieren; und
das Trocknen des pelletierten Acrylpolymers mit Mehrschichtstruktur, das für die Herstellung des Gemischs verwendet werden soll,
wobei das Trocknen der Aufschlämmung oder das Trocknen des pelletierten Acrylpolymers mit Mehrschichtstruktur so durchgeführt wird, dass ein Feuchtigkeitsprozentsatz weniger als 0,1 Massen-% beträgt,
das Waschen und Entwässern der Aufschlämmung wiederholt durchgeführt werden, so dass das entfernte Acrylpolymer mit Mehrschichtstruktur einen Säurewert von nicht mehr als 0,008 mmol/g in einer acetonunlöslichen Substanz und einen Säurewert von nicht mehr als 0,012 mmol/g in einer acetonlöslichen Substanz aufweist, und
das Extrusionsformen unter Verwendung eines Extruders mit einer Verweilzeit von nicht mehr als 5 Minuten und einer Harztemperatur von nicht mehr als 280°C in dem Extruder durchgeführt wird.

4. Verfahren zur Herstellung des Harzfilms nach Anspruch 3, wobei das Waschen und Entwässern der Aufschlämmung mindestens zweimal unter Verwendung einer Schneckendekantierzentrifuge durchgeführt werden.

5. Geschichtetes Produkt, umfassend:

mindestens eine Schicht des Harzfilms nach Anspruch 1 oder 2; und
mindestens eine Schicht eines geformten Produkts aus einem anderen thermoplastischen Polymer.

6. Geschichtetes Produkt nach Anspruch 5, wobei das andere thermoplastische Polymer mindestens eines ist, das aus Polycarbonatpolymeren, Vinylchloridpolymeren, Vinylidenfluoridpolymeren, Vinylacetatpolymeren, Maleinsäurecopolymeren, Methacrylharzen, ABS-Harzen, AES-Harzen und AS-Harzen ausgewählt ist.

## Revendications

1. Film de résine comprenant un polymère acrylique à structure multicouche, et le film de résine ayant une valeur acide de pas plus de 0,018 mmole/g dans une matière insoluble dans l'acétone, une valeur acide de pas plus de 0,012 mmole/g dans une matière soluble dans l'acétone, une température de transition vitreuse de pas moins de 80 °C, une largeur de variation de turbidité ($\Delta H^{80}$) avant et après un test de résistance au blanchiment à l'eau chaude avec de l'eau à 80 °C de 5 % ou moins, une largeur de variation de turbidité ($\Delta H^{100}$) avant et après un test de résistance au blanchiment à l'eau bouillante avec de l'eau à 100 °C de 5 % ou moins, et une épaisseur de 5 à 300 μm,

dans lequel le polymère acrylique à structure multicouche comprend un polymère (a), un polymère (b) et un polymère (c),

le polymère (a) est un polymère composé de 40 à 98,99 % en masse d'une unité structurelle dérivée de méthacrylate de méthyle, 1 à 60 % en masse d'une unité structurelle dérivée d'un acrylate d'alkyle ayant un groupe alkyle de 1 à 8 carbones, 0,01 à 1 % en masse d'une unité structurelle dérivée d'un réticulant, et 0 à 0,5 % en masse d'une unité structurelle dérivée d'un agent de réticulation ;

le polymère (b) est un polymère composé de 70 à 99,5 % en masse d'une unité structurelle dérivée d'un acrylate d'alkyle ayant un groupe alkyle de 1 à 8 carbones, 0 à 30 % en masse d'une unité structurelle dérivée de méthacrylate de méthyle, 0,5 à 5 % en masse d'une unité structurelle dérivée d'un réticulant, et 0 à 5 % en masse d'une unité structurelle dérivée d'un agent de réticulation ; et

le polymère (c) est un polymère composé de 80 à 99 % en masse d'une unité structurelle dérivée de méthacrylate de méthyle, et 1 à 20 % en masse d'une unité structurelle dérivée d'un acrylate d'alkyle ayant un groupe alkyle de 1 à 8 carbones et ayant une température de transition vitreuse de pas moins de 80 °C, dans lequel le film de résine peut être obtenu par un procédé de production comprenant :

polymériser 40 à 98,99 % en masse de méthacrylate de méthyle, 1 à 60 % en masse d'un acrylate d'alkyle ayant un groupe alkyle de 1 à 8 carbones, 0,01 à 1 % en masse d'un réticulant et 0 à 0,5 % en masse d'un agent de réticulation en présence d'un agent émulsifiant pour obtenir un latex (I) contenant le polymère (a) ;

polymériser 70 à 99,5 % en masse d'un acrylate d'alkyle ayant un groupe alkyle de 1 à 8 carbones, 0 à 30 % en masse de méthacrylate de méthyle, 0,5 à 5 % en masse d'un réticulant et 0 à 5 % en masse d'un agent de réticulation en présence du latex (I) pour obtenir un latex (II) contenant le polymère (a) et le polymère (b) ;

polymériser 80 à 99 % en masse de méthacrylate de méthyle et 1 à 20 % en masse d'un acrylate d'alkyle ayant un groupe alkyle de 1 à 8 carbones en présence du latex (II) pour obtenir un latex (III) contenant le polymère (a), le polymère (b) et le polymère (c) ;

faire coaguler le latex (III) pour obtenir une barbotine ;

laver et déshydrater la barbotine ;

sécher la barbotine déshydratée pour éliminer un polymère acrylique à structure multicouche comprenant le polymère (a), le polymère (b) et le polymère (c) ; et

faire fondre et mouler par extrusion un mélange de 0 à 35 % en masse d'une résine acrylique et 65 à 100 % en masse du polymère acrylique à structure multicouche éliminé,

dans lequel le procédé comprend :

après le séchage de la barbotine déshydratée pour éliminer le polymère acrylique à structure multicouche comprenant le polymère (a), le polymère (b) et le polymère (c), alimenter le polymère acrylique à structure multicouche éliminé à une extrudeuse pour être pastillé ; et

sécher le polymère acrylique à structure multicouche pastillé devant être utilisé pour produire le mélange,

dans lequel le séchage de la barbotine ou le séchage du polymère acrylique à structure multicouche pastillé est réalisé de sorte qu'un pourcentage d'humidité est inférieur à 0,1 % en masse,

le lavage et la déshydratation de la barbotine sont réalisés de manière répétée de sorte que le polymère acrylique à structure multicouche éliminé a une valeur acide de pas plus de 0,008 mmole/g dans une matière insoluble dans l'acétone et une valeur acide de pas plus de 0,012 mmole/g dans une matière soluble dans l'acétone, et

le moulage par extrusion est réalisé en utilisant une extrudeuse avec un temps de séjour de pas plus de 5 minutes et une température de résine qui n'est pas supérieure à 280 °C dans l'extrudeuse,

dans lequel la valeur acide, la température de transition vitreuse et la largeur de variation de turbidité sont mesurées tel que spécifié dans la description.

2.  Film de résine selon la revendication 1, dans lequel le lavage et la déshydratation de la barbotine sont réalisés au moins deux fois en utilisant une centrifugeuse à décanteur à vis.

3.  Procédé de production d'un film de résine,

dans lequel le film de résine comprend un polymère acrylique à structure multicouche, et le film de résine a une valeur acide de pas plus de 0,018 mmole/g dans une matière insoluble dans l'acétone, une valeur acide de pas plus de 0,012 mmole/g dans une matière soluble dans l'acétone, une température de transition vitreuse de pas moins de 80 °C, une largeur de variation de turbidité ($\Delta H^{80}$) avant et après un test de résistance au blanchiment à l'eau chaude avec de l'eau à 80 °C de 5 % ou moins, une largeur de variation de turbidité ($\Delta H^{100}$) avant et après un test de résistance au blanchiment à l'eau bouillante avec de l'eau à 100 °C de 5 % ou moins, et une épaisseur de 5 à 300 $\mu$m,

dans lequel le polymère acrylique à structure multicouche comprend un polymère (a), un polymère (b) et un polymère (c),

le polymère (a) est un polymère composé de 40 à 98,99 % en masse d'une unité structurelle dérivée de méthacrylate de méthyle, 1 à 60 % en masse d'une unité structurelle dérivée d'un acrylate d'alkyle ayant un groupe alkyle de 1 à 8 carbones, 0,01 à 1 % en masse d'une unité structurelle dérivée d'un réticulant, et 0 à 0,5 % en masse d'une unité structurelle dérivée d'un agent de réticulation ;

le polymère (b) est un polymère composé de 70 à 99,5 % en masse d'une unité structurelle dérivée d'un acrylate d'alkyle ayant un groupe alkyle de 1 à 8 carbones, 0 à 30 % en masse d'une unité structurelle dérivée de méthacrylate de méthyle, 0,5 à 5 % en masse d'une unité structurelle dérivée d'un réticulant, et 0 à 5 % en masse d'une unité structurelle dérivée d'un agent de réticulation ; et

le polymère (c) est un polymère composé de 80 à 99 % en masse d'une unité structurelle dérivée de méthacrylate de méthyle, et 1 à 20 % en masse d'une unité structurelle dérivée d'un acrylate d'alkyle ayant un groupe alkyle de 1 à 8 carbones et ayant une température de transition vitreuse de pas moins de 80 °C,

le procédé comprenant :

polymériser 40 à 98,99 % en masse de méthacrylate de méthyle, 1 à 60 % en masse d'un acrylate d'alkyle ayant un groupe alkyle de 1 à 8 carbones, 0,01 à 1 % en masse d'un réticulant et 0 à 0,5 % en masse d'un agent de réticulation en présence d'un agent émulsifiant pour obtenir un latex (I) contenant le polymère (a) ;

polymériser 70 à 99,5 % en masse d'un acrylate d'alkyle ayant un groupe alkyle de 1 à 8 carbones, 0 à 30 % en masse de méthacrylate de méthyle, 0,5 à 5 % en masse d'un réticulant et 0 à 5 % en masse d'un agent de réticulation en présence du latex (I) pour obtenir un latex (II) contenant le polymère (a) et le polymère (b) ;

polymériser 80 à 99 % en masse de méthacrylate de méthyle et 1 à 20 % en masse d'un acrylate d'alkyle ayant un groupe alkyle de 1 à 8 carbones en présence du latex (II) pour obtenir un latex (III) contenant le polymère (a), le polymère (b) et le polymère (c) ;

faire coaguler le latex (III) pour obtenir une barbotine ;

laver et déshydrater la barbotine ;

sécher la barbotine déshydratée pour éliminer un polymère acrylique à structure multicouche comprenant le polymère (a), le polymère (b) et le polymère (c) ; et

faire fondre et mouler par extrusion un mélange de 0 à 35 % en masse d'une résine acrylique et 65 à 100 % en masse du polymère acrylique à structure multicouche éliminé,

dans lequel le procédé comprend :

après le séchage de la barbotine déshydratée pour éliminer le polymère acrylique à structure multicouche comprenant le polymère (a), le polymère (b) et le polymère (c), alimenter le polymère acrylique à structure multicouche éliminé à une extrudeuse pour être pastillé ; et

sécher le polymère acrylique à structure multicouche pastillé devant être utilisé pour produire le mélange,

dans lequel le séchage de la barbotine ou le séchage du polymère acrylique à structure multicouche pastillé est réalisé de sorte qu'un pourcentage d'humidité est inférieur à 0,1 % en masse,

le lavage et la déshydratation de la barbotine sont réalisés de manière répétée de sorte que le polymère acrylique à structure multicouche éliminé a une valeur acide de pas plus de 0,008 mmole/g dans une matière insoluble dans l'acétone et une valeur acide de pas plus de 0,012 mmole/g dans une matière soluble dans l'acétone, et

le moulage par extrusion est réalisé en utilisant une extrudeuse avec un temps de séjour de pas plus de 5 minutes et une température de résine qui n'est pas supérieure à 280 °C dans l'extrudeuse.

4. Procédé de production du film de résine selon la revendication 3, dans lequel le lavage et la déshydratation de la barbotine sont réalisés au moins deux fois en utilisant une centrifugeuse à décanteur à vis.

5. Produit stratifié comprenant :

au moins une couche du film de résine selon la revendication 1 ou 2 ; et

au moins une couche d'un produit mis en forme d'un autre polymère thermoplastique.

6. Produit stratifié selon la revendication 5, dans lequel l'autre polymère thermoplastique est au moins un sélectionné parmi des polymères de polycarbonate, polymères de chlorure de vinyle, polymères de fluorure de vinylidène, polymères d'acétate de vinyle, copolymères d'acide maléique, résines méthacryliques, résines ABS, résines AES, et résines AS.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000191804 A
- JP 2003277528 A
- JP 2009073984 A
- JP 2004263034 A
- WO 2012053190 A1
- US 4508875 A
- JP H1171437 A
- JP 2001064469 A
- US 4452941 A
- EP 0210450 A1